# EUROPEAN PATENT APPLICATION

(11) **EP 2 064 952 A1**
(43) Date of publication of application: **03.06.2009**
(21) Application number: 07121938.0
(22) Date of filing: 29.11.2007
(51) Int. Cl.: A01N 43/653, A01N 37/50, A01N 43/54, A01N 43/36, A01N 43/40, A01N 43/56, A01P 3/00

(54) **Method for reducing mycotoxin contamination in maize**

(71) Applicant: Bayer CropScience AG, 40789 Monheim (DE)
(72) Inventor: The designation of the inventor has not yet been filed

(57) **Abstract**

The present application relates to a method for the reduction of mycotoxin contamination of maize or corn plants and/or plant material from maize or corn before and/or after harvest and/or during storage, in particular genetically modified maize or corn by the use of one or a combination of two or more fungicidally active compounds.

## Description

The present application relates to a method for the reduction of mycotoxin contamination of maize or corn plants and/or plant material from maize or corn before and/or after harvest and/or during storage, in particular genetically modified maize or corn by the use of one or a combination of two or more fungicidally active compounds. In the following maize and corn are used synonymously.

Numerous fungi are serious pests of economically important agricultural crops. Further, crop contamination by fungal toxins is a major problem for agriculture throughout the world.

Mycotoxins, such as aflatoxins, ochratoxins, fumonisins, zearalenones, and trichothecenes, are toxic fungal metabolites, often found in agricultural products that are characterized by their ability to cause health problems for humans and vertebrates. They are produced for example by different Fusarium and Aspergillus species.

Aflatoxins are toxins produced by Aspergillus species that grow on several crops, in particular on maize or corn before and after harvest of the crop as well as during storage. The biosynthesis of aflatoxins involves a complex polyketide pathway starting with acetate and malonate. One important intermediate is sterigmatocystin and O-methylsterigmatocystin which are direct precursors of aflatoxins. Important producers of aflatoxins are Aspergillus flavus, most strains of Aspergillus parasiticus, Aspergillus nomius, Aspergillus bombycis, Aspergillus pseudotamarii, Aspergillus ochraceoroseus, Aspergillus rambelli, Emericella astellata, Emericella venezuelensis, Bipolaris spp., Chaetomium spp., Farrowia spp., and Monocillium spp., in particular Aspergillus flavus and Aspergillus parasiticus (Plant Breeding (1999), 118, pp 1 - 16). There are also additional Aspergillus species known. The group of aflatoxins consists of more than 20 different toxins, in particular aflatoxin B1, B2, G1 and G2, cyclopiazonic acid (CPA).

Ochratoxins are mycotoxins produced by some *Aspergillus* species and *Penicilium* species, like *A. ochraceus, A. carbonarius* or *P. viridicatum,* Examples for Ochratoxins are ochratoxin A, B, and C. Ochratoxin A is the most prevalent and relevant fungal toxin of this group.

Fumonisins are toxins produced by Fusarium species that grow on several crops, mainly corn, before and after harvest of the crop as well as during storage. The diseases, Fusarium kernel, ear and stalk rot of corn, is caused by Fusarium verticillioides, F. subglutinans, F. *moniliforme,* and F. proliferatum. The main mycotoxins of these species are the fumonisins, of which more than ten chemical forms have been isolated. Examples for fumonisins are FB1, FB2 and FB3. In addition the above mentioned Fusarium species of corn can also produce the mycotoxins moniliformin and beauvericin. In particular Fusarium verticillioides is mentioned as an important pathogen of corn, this Fusarium species produces as the main mycotoxin fumonisins of the B-type.

Trichothecenes are those mycotoxins of primary concern which can be found in Fusarium head blight disease of small grain cereals like wheat, barley, rye, triticale, rice, sorghum and oat. They are sesquiterpene epoxide mycotoxins produced by species of Fusarium, Trichothecium, and Myrothecium and act as potent inhibitors of eukaryotic protein

Synthesis. Some of these trichothecene producing Fusarium species also infect corn or maize.

Examples of trichothecene mycotoxins include T-2 toxin, HT-2 toxin, isotrichodermol, DAS, 3-deacetylcalonectrin, 3,15-dideacetylcalonectrin, scirpentriol, neosolaniol; 15-acetyldeoxynivalenol, nivalenol, 4-acetylnivalenol (fusarenone-X), 4,15-diacetylnivalenol, 4,7,15-acetylnivalenol, and deoxynivalenol (hereinafter "DON") and their various acetylated derivatives. The most common trichothecene in Fusarium head blight is DON produced for example by Fusarium graminearum and F. culmorum.

Another mycotoxin mainly produced by F. culmorum, F. graminearum and F. cerealis is zearalenone, a phenolic resorcyclic acid lactone that is primarily an estrogenic fungal metabolite.

Fusarium species that produce mycotoxins, such as fumonisins and trichothecenes, include F. acuminatum, F. crookwellense, F., verticillioides, F. culmorum, F. avenaceum, F. equiseti, F. moniliforme, F, graminearum (Gibberella zeae), F. lateritium, F. poae, F. sambucinum (G. pulicaris), F. proliferatum, F. subglutinans, F. sporotrichioides and other Fusarium species.

In contrast the species Microdochium nivale also a member of the so-called Fusarium complex is known to not produce any mycotoxins.

Both acute and chronic mycotoxicoses in farm animals and in humans have been associated with consumption of wheat, rye, barley, oats, rice and maize contaminated with

Fusarium species that produce trichothecene mycotoxins. Experiments with chemically pure trichothecenes at low dosage levels have reproduced many of the features observed in moldygrain toxicoses in animals, including anemia and immunosuppression, haemorrage, emesis and feed refusal. Historical and epidemiological data from human populations indicate an association between certain disease epidemics and consumption of grain infected with Fusarium species that produce trichothecenes. In particular, outbreaks of a fatal disease known as alimentary toxic aleukia, which has occurred in Russia since the nineteenth century, have been associated with consumption of over-wintered grains contaminated with Fusarium species that produce the trichothecene T-2 toxin. In Japan, outbreaks of a similar disease called akakabi-byo or red mold disease have been associated with grain infected with Fusarium species that produce the trichothecene, DON. Trichothecenes were detected in the toxic grain samples responsible for recent human disease outbreaks in India and Japan. There exists, therefore, a need for agricultural methods for preventing, and crops having reduced levels of, mycotoxin contamination.

Further, mycotoxin-producing Fusarium species are destructive pathogens and attack a wide range of plant species. The acute phytotoxicity of mycotoxins and their occurrence in plant tissues also suggests that these mycotoxins play a role in the pathogenesis of Fusarium on plants. This implies that mycotoxins play a role in disease and, therefore, reducing their toxicity to the plant may also prevent or reduce disease in the plant. Further, reduction in disease levels may have the additional benefit of reducing mycotoxin contamination on the plant and particularly in grain where the plant is a cereal plant.

There is a need, therefore, to decrease the contamination by mycotoxins of plants and plant material before and/or after harvest and/or during storage.

WO 2007/009988 describes the use of growth regulators like trinexapac-ethyl and prohexadion-calcium for reducing or preventing the contamination of cereals with mycotoxin.

WO 2007/009969 describes the combined use of metconazole and epoxiconazole for reducing of preventing the contamination of cereals with mycotoxin. WO 2007/003320 describes the method for treating fungi-infested plant propagation material with one or more chemical fungicides to reduce mycotoxin contamination of plants and/or harvested plant material. WO 2006/106742 describes the use of benzimidazole or the use of combinations comprising benzimidazoles and sterol biosynthesis inhibitors in order to inhibit the mycotoxin generation of fungi in crops.

The effect of fungicides on mycotoxin contamination in crops is discussed controversially as contradicting results are found. Disease development and mycotoxin production by the infecting fungi is influenced by a variety of factors not being limited to weather conditions, agricultural techniques, fungicide dose and application, growth stage of crops, colonization of crops by different fungi species, susceptibility of host crops and infection mode of fungi species. For example Microdochium nivale not producing any mycotoxin is able to reduce growth and DON accumulation of F. culmorum. It is also known that the different fungi use separate routes when infecting the plant. For example Fusarium species producing fumonisins are known to infect maize by wound inoculation. The wounds are mainly caused by insects like the European and Southwestern corn borer or the corn earworm, in particular by the European corn borer (Ostrinia nubialis). Therefore it is discussed that maize being transformed with genes coding for insecticidal proteins for example with those from Bacillus thuringiensis should show reduced level of mycotoxins, in particular fumonisins (Wu, Transgenic Research (2006), 15, 277-289). In contrast other fungal species for example Fusarium graminearum and Aspergillus flavus are infecting maize via the silk channel. Also insect pest damage is less strongly correlated with aflatoxin concentrations in maize, because a variety of factors is influencing aflatoxin content in maize (Wu, Transgenic Research (2006), 15, 277-289).

Therefore prohibiting fungal infection via controlling insects that promote infection by wounding is not sufficient for reducing effectively mycotoxin contamination of maize, especially for DON, Zearalenone and aflatoxins.

It has also to be mentioned that breeding for fungal resistance in crops in contrast to insecticidal resistance is much more difficult. There have been several classical and transgenic breeding approaches, but obviously a high level of resistance is difficult to obtain.

Therefore application of fungicidal active compounds represents the most effective mode to control fungal infections of plants and thereby reducing mycotoxin content.

Therefore the problem to be solved by the present invention is to provide fungicidally active compounds which lead by their application on maize or corn plants and/or plant material from maize or corn before and/or after harvest and/or during storage to a reduction in mycotoxins in all plant and plant material.

Surprisingly it has now been found that the treatment of maize or corn plants and/or plant material from maize or corn before and/or after harvest and/or during storage, in particular genetically modified maize or corn with one or a combination of two or more fungicidal compounds selected from the group (I) comprising of (Ia) members of the azole group as Cyproconazole, Epoxiconazole, Flusilazole, Ipconazole, Propiconazole, Prothioconazole, Metconazole, Tebuconazole, Triadimenol, (Ib) members of the strobilurin group as Azoxystrobin, Fluoxastrobin, Kresoxim-methyl, Picoxystrobin, Pyraclostrobin, Trifloxystrobin, and (Ic) a group of other fungides as Boscalid, Chlorothalonil, Cyprodinil, Fludioxonil, Fluopyram, Myclobutonil, Prochloraz, Spiroxamine, N-(3',4'-dichloro-5-fluoro[1,1'-biphenyl]-2-yl)-3-(difluoromethyl)-1-methyl-1H-pyrazole-4-carboxamide, 5-Chlor-6-(2,4,6-trifluorphenyl)-7-(4-methylpiperidin-1-yl)[1,2,4]triazolo[1,5-a]pyrimidin, 1-methyl-N-{2-[1'-methyl-1,1'-bi(cyclopropyl)-2-yl]phenyl}-3-(trifluoromethyl)-1H-pyrazole-4-carboxamide, N-{2-[1,1'-bi(cyclopropyl)-2-yl]phenyl}-1-methyl-3-(trifluoromethyl)-1H-pyrazole-4-carboxamide, 1-methyl-N-{2-[1'-methyl-1,1'-bi(cyclopropyl)-2-yl]phenyl}-3-(difluoromethyl)-1H-pyrazole-4-carboxamide, N-{2-[1,1'-bi(cyclopropyl)-2-yl]phenyl}-1-methyl-3-(difluoromethyl)-1H-pyrazole-4-carboxamide reduces mycotoxin contamination in the crop before and/or after harvest and/or during storage.

### Definitions

The fungicidal compound or the combination and/or composition according to the invention can be used curatively or preventively in order to reduce the mycotoxin contamination of maize or corn plants and/or plant material from maize or corn before and/or after harvest and/or during storage, in particular genetically modified maize or corn. Thus, according to a further aspect of the invention, there is provided a method for curatively or preventively reducing the mycotoxin contamination of maize or corn comprising the use of one or a combination of two or more fungicidal compounds selected from the group (I) according to the invention by application to the seed, the plant or to the fruit of the plant or to the soil in which the plant is growing or in which it is desired to grow.

According to the invention the expression "combination" stands for the various combinations of two or more compounds from group (I), for example in a single "ready-mix" form, in a combined spray mixture composed from separate formulations of the single active compounds, such as a "tank-mix", and in a combined use of the single active ingredients when applied in a sequential manner, i.e. one after the other with a reasonably short period, such as a few hours or days. Preferably the order of applying the compounds from group (I) is not essential for working the present invention.

According to the invention all maize species are comprised, in particular flour corn (Zea mays var. amylacea ), popcorn (Zea mays var. everta), Dent corn (Zea mays var. indentata ), flint corn (Zea mays var. indurata), sweetcorn (Zea mays var. saccharata and Zea mays var. rugosa ), waxy corn (Zea mays var. ceratina), amylomaize (Zea mays) , pod corn (Zea mays var. tunicata Larrañaga ex A. St. Hil. ), striped maize (Zea mays var. Japonica).

According to the invention all plants and plant material can be treated. By plants is meant all plants and plant populations such as desirable and undesirable wild plants, cultivars (including naturally occurring cultivars) and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods including transgenic plants.

By plant material is meant all above ground and below ground parts and organs of plants such as shoot, leaf, flower, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners, fruits, grains, pods, fruiting bodies, tubers and seedlings, and seeds also belong to plant parts.

According to the invention "before harvest" means the period of time starting from deploying the plant propagation material (e. g. seeds or seedlings) into an environment which supports plant growth (e. g. fields, greenhouses) until the plant or plant material is removed from this environment.

According to the invention the process of removing plant or plant material from the environment supporting plant growth is defined as "harvest".

According to the invention "after harvest" means the period of time starting with the harvest of plant or plant material.

According to the invention "during storage" means the period of time in which the harvested plant or plant material is stored for further usages.

The fungicidal compound or compounds to be used in the treatment methods of the present invention include, but are not limited to group (I) comprising of (Ia) members of the azole group as Cyproconazole (113096-99-4), Epoxiconazole (106325-08-0), Flusilazole (85509-19-9), Ipconazole (125225-28-7), Propiconazole (60207-90-1), Prothioconazole (178928-70-6), Metconazole (125116-23-6), Tebuconazole (107534-96-3), Triadimenol (89482-17-7), (Ib) members of the strobilurin group as Azoxystrobin (131860-33-8), Fluoxastrobin (361377-29-9, Kresoxim-methyl (143390-89-0), Picoxystrobin (117428-22-5), Pyraclostrobin (175013-18-0), Trifloxystrobin (141517-21-7), and (Ic) a group of other fungicides as Boscalid (188425-85-6), Chlorothalonil (1897-45-6), Cyprodinil (121552-61-2), Fludioxonil (131341-86-1), Fluopyram (658066-35-4), Myclobutonil (88671-89-0), Prochloraz (67747-09-5), Spiroxamine (118134-30-8), N-(3',4'-dichloro-5-fluoro [1,1'-biphenyl]-2-yl)-3-(difluoromethyl)-1-methyl-1H-pyrazole-4-carboxamide (Bixafen, 581809-46-3), 5-Chlor-6-(2,4,6-trifluorphenyl)-7-(4-methylpiperidin-1-yl)[1,2,4]triazolo[1,5-a]pyrimidin (214706-53-3), 1-methyl-N-{2-[1'-methyl-1,1'-bi(cyclopropyl)-2-yl]phenyl}-3-(trifluoromethyl)-1H-pyrazole-4-carboxamide (WO 2006/015865-A1), N-{2-[1,1'-bi(cyclopropyl)-2-yl]phenyl}-1-methyl-3-(trifluoromethyl)-1H-pyrazole-4-carboxamide (WO 2006/015865-A1), 1-methyl-N- {2-[1'-methyl-1,1'-bi(cyclopropyl)-2-yl]phenyl}-3-(difluoromethyl)-1H-pyrazole-4-carboxamide (WO 2006/015865-A1), N-{2-[1,1'-bi(cyclopropyl)-2-yl]phenyl}-1-methyl-3-(difluoromethyl)-1H-pyrazole-4-carboxamide (WO 2006/015865-A1).

These fungicidal compounds are characterized by their CAS-numbers or a PCT publication number in brackets behind the name:
The fungicide of the invention can be used in combination with at least one other fungicide of group (I).

In a particular embodiment, the fungicide is from the group (Ia) Cyproconazole, Epoxiconazole, Flusilazole, Ipconazole, Propiconazole, Prothioconazole, Metconazole, Tebuconazole, Triadimenol.

In a particular embodiment, the fungicide is from the group (Ia) Cyproconazole, Epoxiconazole, Ipconazole, Propiconazole, Prothioconazole, Metconazole, Tebuconazole .

In a particular embodiment, the fungicide is from the group (Ia) Epoxiconazole, Ipconazole, Prothioconazole, Tebuconazole.

In a particular embodiment, the fungicide is from the group (Ia) Prothioconazole, Tebuconazole .

In a particular embodiment, the fungicide is from the group (Ib) Azoxystrobin, Fluoxastrobin, Picoxystrobin, Pyraclostrobin, Trifloxystrobin.

In a particular embodiment, the fungicide is from the group (Ib) Fluoxastrobin, Picoxystrobin, Pyraclostrobin, Trifloxystrobin .

In a particular embodiment, the fungicide is from the group (Ib) Trifloxystrobin .

In a particular embodiment, the fungicide is from the group (Ic) Boscalid, Chlorothalonil, Cyprodinil, Fludioxonil, Fluopyram, Myclobutonil, Prochloraz, Spiroxamine, N-(3',4'-dichloro-5-fluoro[1,1'-biphenyl]-2-yl)-3-(difluoromethyl)-1-methyl-1H-pyrazole-4-carboxamide, 5-Chlor-6-(2,4,6-trifluorphenyl)-7-(4-methylpiperidin-1-yl)[1,2,4]triazolo[1,5-a]pyrimidin, 1-methyl-N-{2-[1'-methyl-1,1'-bi(cyclopropyl)-2-yl]phenyl}-3-(trifluoromethyl)-1H-pyrazole-4-carboxamide, N- {2-[1,1'-bi(cyclopropyl)-2-yl]phenyl}-1-methyl-3-(trifluoromethyl)-1H-pyrazole-4-carboxamide, 1-methyl-N- {2-[1'-methyl-1,1'-bi(cyclopropyl)-2-yl]phenyl}-3-(difluoromethyl)-1H-pyrazole-4-carboxamide, N-{2-[1,1'-bi(cyclopropyl)-2-yl]phenyl}-1-methyl-3-(difluoromethyl)-1H-pyrazole-4-carboxamide.

In a particular embodiment, the fungicide is from the group (Ic) Boscalid, Cyprodinil, Fludioxonil, Fluopyram, Myclobutonil, Prochloraz, Spiroxamine, N-(3',4'-dichloro-5-fluoro[1,1'-biphenyl]-2-yl)-3-(difluoromethyl)-1-methyl-1H-pyrazole-4-carboxamide, 5-Chlor-6-(2,4,6-trifluorphenyl)-7-(4-methylpiperidin-1-yl)[1,2,4]triazolo[1,5-a]pyrimidin.

In a particular embodiment, the fungicide is from the group (Ic) Boscalid, Cyprodinil, Fludioxonil, Fluopyram, N-(3',4'-dichloro-5-fluoro[1,1'-biphenyl]-2-yl)-3-(difluoromethyl)-1-methyl-1H-pyrazole-4-carboxamide.

In a particular embodiment, the fungicide is from the group (Ia) Cyproconazole, Epoxiconazole, Ipconazole, Propiconazole, Prothioconazole, Metconazole, Tebuconazole, from group (Ib) members of the strobilurin group as Azoxystrobin, Fluoxastrobin, Picoxystrobin, Pyraclostrobin, Trifloxystrobin, and from group (Ic) Boscalid, Cyprodinil, Fludioxonil, Fluopyram, Prochloraz, N-(3',4'-dichloro-5-fluoro[1,1'-biphenyl]-2-yl)-3-(difluoromethyl)-1-methyl-1H-pyrazole-4-carboxamide, 5-Chlor-6-(2,4,6-trifluorphenyl)-7-(4-methylpiperidin-1-yl)[1,2,4]triazolo[1,5-a]pyrimidin.

In a very particular embodiment, the fungicide is from the group (Ia) Epoxiconazole, Ipconazole, Propiconazole, Prothioconazole, Metconazole, Tebuconazole, from group (Ib) members of the strobilurin group as Fluoxastrobin, Pyraclostrobin, Trifloxystrobin, and from group (Ic) Boscalid, Cyprodinil, Fludioxonil, Fluopyram, N-(3',4'-dichloro-5-fluoro[1,1'-biphenyl]-2-yl)-3-(difluoromethyl)-1-methyl-1H-pyrazole-4-carboxamide.

In a very particular embodiment, the fungicide is from the group (Ia) Epoxiconazole, Ipconazole, Prothioconazole, Tebuconazole, from group (Ib) members of the strobilurin group as Trifloxystrobin, Picoxystrobin, Pyraclostrobin, Fluoxastrobin, and from group (Ic) Cyprodinil, Fludioxonil.

In a very particular embodiment, the fungicide is from the group (Ia) Prothioconazole, Tebuconazole, from group (Ib) members of the strobilurin group as Trifloxystrobin.

In a particular embodiment, the active compound combinations are comprising of one fungicide from group (Ia) and one fungicide of group (Ib).

In a particular embodiment, the active compound combinations are comprising of one fungicide from group (Ia) and one fungicide of group (Ic).

In a particular embodiment, the active compound combinations are comprising of one fungicide from group (Ib) and one fungicide of group (Ic).

In a particular embodiment, the active compound combinations are comprising of more than one fungicide from group (Ia).

In a particular embodiment, the active compound combinations are comprising of more than one fungicide from group (Ib).

In a particular embodiment, the active compound combinations are comprising of more than one fungicide from group (Ic).

Very particular preference is given to combinations comprising one fungicide from group (Ia) Cyproconazole, Epoxiconazole, Flusilazole, Ipconazole, Propiconazole, Prothioconazole, Metconazole, Tebuconazole, Triadimenol and one fungicide of group (Ib) Azoxystrobin, Fluoxastrobin, Kresoxim-methyl, Picoxystrobin, Pyraclostrobin, Trifloxystrobin.

Very particular preference is given to combinations comprising one fungicide from group (Ia) Epoxiconazole, Ipconazole, Propiconazole, Prothioconazole, Metconazole, Tebuconazole and one fungicide of group (Ib) Azoxystrobin, Fluoxastrobin, Pyraclostrobin, Trifloxystrobin.

Very particular preference is given to combinations comprising one fungicide from group (Ia) Prothioconazole, Tebuconazole and one fungicide of group (Ib) Trifloxystrobin.

Particularly preferred combinations comprising of two fungicides are listed below:
Epoxiconazole and Azoxystrobin,
Ipconazole and Azoxystrobin,
Propiconazole and Azoxystrobin,
Prothioconazole and Azoxystrobin,
Metconazole and Azoxystrobin,
Tebuconazole and Azoxystrobin,
Epoxiconazole and Pyraclostrobin,
Ipconazole and Pyraclostrobin,
Propiconazole and Pyraclostrobin,
Prothioconazole and Pyraclostrobin,
Metconazole and Pyraclostrobin,
Tebuconazole and Pyraclostrobin,
Epoxiconazole and Fluoxastrobin,
Ipconazole and Fluoxastrobin,
Propiconazole and Fluoxastrobin,
Prothioconazole and Fluoxastrobin,
Metconazole and Fluoxastrobin,
Tebuconazole and Fluoxastrobin,
Epoxiconazole and Trifloxystrobin,
Ipconazole and Trifloxystrobin,
Propiconazole and Trifloxystrobin,
Prothioconazole and Trifloxystrobin,
Metconazole and Trifloxystrobin,
Tebuconazole and Trifloxystrobin,
Fludioxonil und Myclobutanil.
Epoxiconazole and Ipconazole,
Propiconazole and Ipconazole,
Prothioconazole and Ipconazole,
Metconazole and Ipconazole,
Tebuconazole and Ipconazole,
Epoxiconazole and Propiconazole,
Prothioconazole and Propiconazole,
Metconazole and Propiconazole,
Tebuconazole and Propiconazole,
Epoxiconazole and Prothioconazole,
Metconazole and Prothioconazole,
Tebuconazole and Prothioconazole,
Epoxiconazole and Metconazole,
Tebuconazole and Metconazole,
Epoxiconazole and Tebuconazole.

If the compounds in the active compound combinations according to the invention are present in certain weight ratios, the mycotoxin-reducing effect is particularly pronounced. However, the weight ratios of the active compounds in the active compound combinations can be varied within a relatively wide range. In general, in the combinations according to the invention the compounds selected from group (I) are present in a synergistically effective weight ratio of the first to the second compound in a range of 100:1 to 1:100, preferably in a weight ratio of 50:1 to 1:50, most preferably in a weight ratio of 20:1 to 1:20.

According to the invention the expression "combination" stands for the various combinations of compounds of group (I), for example in a single "ready-mix" form, in a combined spray mixture composed from separate formulations of the single active compounds, such as a "tank-mix", and in a combined use of the single active ingredients when applied in a sequential manner, i.e. one after the other with a reasonably short period, such as a few hours or days. Preferably the order of applying the compounds of group (I) is not essential for working the present invention.

In a particular embodiment the fungi producing the mycotoxins are selected from the group of the following species: F. acuminatum, F. crookwellense, F., verticillioides, F. culmorum, F. avenaceum, F. equiseti, F. moniliforme, F, graminearum (Gibberella zeae), F. lateritium, F. poae, F. sambucinum (G. pulicaris), F. proliferatum, F. subglutinans and F. sporotrichioides, Aspergillus flavus, most strains of Aspergillus parasiticus and Aspergillus nomius, A. ochraceus, A. carbonarius or P. viridicatum.

In a very particular embodiment the fungi producing the mycotoxins are selected from the group of the following species: F., verticillioides, F. culmorum, F. moniliforme, F, graminearum (Gibberella zeae), Aspergillus flavus, most strains of Aspergillus parasiticus and Apergillus nomius, A. ochraceus, A. carbonarius.

In a particular embodiment the mycotoxins are selected from the following group: aflatoxins B1, B2, G1 and G2, ochratoxin A, B, C as well as T-2 toxin, HT-2 toxin, isotrichodermol, DAS, 3-deacetylcalonectrin, 3,15-dideacetylcalonectrin, scirpentriol, neosolaniol; zearalenone, 15-acetyldeoxynivalenol, nivalenol, 4-acetylnivalenol (fusarenone-X), 4,15-diacetylnivalenol, 4,7,15-acetylnivalenol, and deoxynivalenol (hereinafter "DON") and their various acetylated derivatives as well as fumonisins of the B-type as FB1, FB2, FB3.

In a very particular embodiment the mycotoxins are selected from the following group: aflatoxins B1, B2, G1 and G2, zearalenone, deoxynivalenol (hereinafter "DON") and their various acetylated derivatives as well as fumonisins of the B-type as FB1, FB2, FB3.

In a very particular embodiment the mycotoxins are selected from the following group: aflatoxins B1, B2, G1 and G2.

In a very particular embodiment the mycotoxins are selected from the following group: zearalenone, deoxynivalenol (hereinafter "DON") and their various acetylated derivatives.

In a very particular embodiment the mycotoxins are selected from the following group: fumonisins of the B-type as FB1, FB2, FB3.

In a particular embodiment of the invention plant or plant material before and/or after harvest and/or during storage has at least 10 % less mycotoxin, more preferable at least 20 % mycotoxin, more preferable at least 40 % mycotoxin, more preferable at least 50 % mycotoxin, more preferable at least 80 % mycotoxin contamination than plant or plant material before and/or after harvest and/or during storage which has not been treated.

Treatment of plant and plant material before and/or after harvest and/or during storage can also involve treatment with further active compounds in combination with the active compounds of the present invention, which treatment may be applied together and/or sequentially in its commercially available formulations and in the use forms, prepared from these formulations.

These further compounds can be attractants, sterilizing agents, bactericides, nematicides, fungicides, growth-regulating substances, herbicides, safeners, fertilizers, inoculants or other plant-growth influencing compounds or semiochemicals.

A particularly effective treatment for maize is a combination comprising a) Prothioconazole and Trifloxystrobin or b) Tebuconazole and Trifloxystrobin or c) Tebuconazole and Prothioconazole.

The method of treatment according to the invention is used in the treatment of genetically modified organisms (GMOs), e.g. plants or seeds. Genetically modified plants (or transgenic plants) are plants of which a heterologous gene has been stably integrated into the genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, co-suppression technology or RNA interference - RNAi - technology). A heterologous gene that is located in the genome is also called a transgene. A transgene that is defined by its particular location in the plant genome is called a transformation or transgenic event.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the active compounds and compositions which can be used according to the invention, better plant growth, increased tolerance to high or low temperatures, increased tolerance to drought or to water or soil salt content, increased flowering performance, easier harvesting, accelerated maturation, higher harvest yields, bigger fruits, larger plant height, greener leaf color, earlier flowering, higher quality and/or a higher nutritional value of the harvested products, higher sugar concentration within the fruits, better storage stability and/or processability of the harvested products are possible, which exceed the effects which were actually to be expected.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozon exposure, high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stress factors. Such plants are typically made by crossing an inbred male-sterile parent line (the female parent) with another inbred male-fertile parent line (the male parent). Hybrid seed is typically harvested from the male sterile plants and sold to growers. Male sterile plants can sometimes (e.g. in corn) be produced by detasseling, i.e. the mechanical removal of the male reproductive organs (or males flowers) but, more typically, male sterility is the result of genetic determinants in the plant genome. In that case, and especially when seed is the desired product to be harvested from the hybrid plants it is typically useful to ensure that male fertility in the hybrid plants is fully restored. This can be accomplished by ensuring that the male parents have appropriate fertility restorer genes which are capable of restoring the male fertility in hybrid plants that contain the genetic determinants responsible for male-sterility. Genetic determinants for male sterility may be located in the cytoplasm. Examples of cytoplasmic male sterility (CMS) were for instance described in Brassica species. However, genetic determinants for male sterility can also be located in the nuclear genome. Male sterile plants can also be obtained by plant biotechnology methods such as genetic engineering. A particularly useful means of obtaining male-sterile plants is described in WO 89/10396 in which, for example, a ribonuclease such as barnase is selectively expressed in the tapetum cells in the stamens. Fertility can then be restored by expression in the tapetum cells of a ribonuclease inhibitor such as barstar.

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Herbicide-tolerant plants are for example glyphosate-tolerant plants, i.e. plants made tolerant to the herbicide glyphosate or salts thereof. Plants can be made tolerant to glyphosate through different means. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium *Salmonella typhimurium,* the CP4 gene of the bacterium *Agrobacterium sp,* the genes encoding a Petunia EPSPS, a Tomato EPSPS, or an Eleusine EPSPS. It can also be a mutated EPSPS. Glyphosate-tolerant plants can also be obtained by expressing a gene that encodes a glyphosate oxido-reductase enzyme. Glyphosate-tolerant plants can also be obtained by expressing a gene that encodes a glyphosate acetyl transferase enzyme. Glyphosate-tolerant plants can also be obtained by selecting plants containing naturally-occurring mutations of the above-mentioned genes.

Other herbicide resistant plants are for example plants that are made tolerant to herbicides inhibiting the enzyme glutamine synthase, such as bialaphos, phosphinothricin or glufosinate. Such plants can be obtained by expressing an enzyme detoxifying the herbicide or a mutant glutamine synthase enzyme that is resistant to inhibition. One such efficient detoxifying enzyme is an enzyme encoding a phosphinothricin acetyltransferase (such as the bar or pat protein from Streptomyces species). Plants expressing an exogenous phosphinothricin acetyltransferase are also described.

Further herbicide-tolerant plants are also plants that are made tolerant to the herbicides inhibiting the enzyme hydroxyphenylpyruvatedioxygenase (HPPD). Hydroxyphenylpyruvatedioxygenases are enzymes that catalyze the reaction in which para-hydroxyphenylpyruvate (HPP) is transformed into homogentisate. Plants tolerant to HPPD-inhibitors can be transformed with a gene encoding a naturally-occurring resistant HPPD enzyme, or a gene encoding a mutated HPPD enzyme. Tolerance to HPPD-inhibitors can also be obtained by transforming plants with genes encoding certain enzymes enabling the formation of homogentisate despite the inhibition of the native HPPD enzyme by the HPPD-inhibitor. Tolerance of plants to HPPD inhibitors can also be improved by transforming plants with a gene encoding an enzyme prephenate dehydrogenase in addition to a gene encoding an HPPD-tolerant enzyme.

Still further herbicide resistant plants are plants that are made tolerant to acetolactate synthase (ALS) inhibitors. Known ALS-inhibitors include, for example, sulfonylurea, imidazolinone, triazolopyrimidines, pyrimidinyoxy(thio)benzoates, and/or sulfonylaminocarbonyltriazolinone herbicides. Different mutations in the ALS enzyme (also known as acetohydroxyacid synthase, AHAS) are known to confer tolerance to different herbicides and groups of herbicides. The production of sulfonylurea-tolerant plants and imidazolinone-tolerant plants is describe. Other imidazolinone-tolerant plants are also described. Further sulfonylurea- and imidazolinone-tolerant plants are also described in for example WO 2007/024782.

Other plants tolerant to imidazolinone and/or sulfonylurea can be obtained by induced mutagenesis, selection in cell cultures in the presence of the herbicide or mutation breeding as described for example for soybeans, for rice, for sugar beet, for lettuce, or for sunflower.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

An "insect-resistant transgenic plant", as used herein, includes any plant containing at least one transgene comprising a coding sequence encoding:
1) an insecticidal crystal protein from *Bacillus thuringiensis* or an insecticidal portion thereof, such as the insecticidal crystal proteins listed by Crickmore et al., Microbiology and Molecular Biology Reviews (1998), 62, 807-813, updated by Crickmore et al. (2005) at the *Bacillus thuringiensis* toxin nomenclature, online at: http://www.lifesci.sussex.ac.uk/Home/Neil_Crickmore/Bt/), or insecticidal portions thereof, e.g., proteins of the Cry protein classes Cry1Ab, Cry1Ac, Cry1F, Cry2Ab, Cry3Aa, or Cry3Bb or insecticidal portions thereof; or
2) a crystal protein from *Bacillus thuringiensis* or a portion thereof which is insecticidal in the presence of a second other crystal protein from *Bacillus thuringiensis* or a portion thereof, such as the binary toxin made up of the Cry34 and Cry35 crystal proteins; or
3) a hybrid insecticidal protein comprising parts of different insecticidal crystal proteins from *Bacillus thuringiensis,* such as a hybrid of the proteins of 1) above or a hybrid of the proteins of 2) above, e.g., the Cry1A.105 protein produced by corn event MON98034; or
4) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation, such as the Cry3Bb1 protein in corn events MON863 or MON88017, or the Cry3A protein in corn event MIR604;
5) an insecticidal secreted protein from *Bacillus thuringiensis* or *Bacillus cereus,* or an insecticidal portion thereof, such as the vegetative insecticidal (VIP) proteins listed at: http://www.lifesci.sussex.ac.uk/home/Neil_Crickmore/Bt/vip.html, e.g., proteins from the VIP3Aa protein class; or
6) secreted protein from *Bacillus thuringiensis* or *Bacillus cereus* which is insecticidal in the presence of a second secreted protein from *Bacillus thuringiensis* or *B. cereus,* such as the binary toxin made up of the VIP1A and VIP2A proteins; or
7) hybrid insecticidal protein comprising parts from different secreted proteins from *Bacillus thuringiensis* or *Bacillus cereus,* such as a hybrid of the proteins in 1) above or a hybrid of the proteins in 2) above; or
8) protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation (while still encoding an insecticidal protein), such as the VIP3Aa protein in cotton event COT102.

Of course, an insect-resistant transgenic plant, as used herein, also includes any plant comprising a combination of genes encoding the proteins of any one of the above classes 1 to 8. In one embodiment, an insect-resistant plant contains more than one transgene encoding a protein of any one of the above classes 1 to 8, to expand the range of target insect species affected when using different proteins directed at different target insect species, or to delay insect resistance development to the plants by using different proteins insecticidal to the same target insect species but having a different mode of action, such as binding to different receptor binding sites in the insect.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance. Particularly useful stress tolerance plants include:
a. plants which contain a transgene capable of reducing the expression and/or the activity of poly(ADP-ribose)polymerase (PARP) gene in the plant cells or plants
b. plants which contain a stress tolerance enhancing transgene capable of reducing the expression and/or the activity of the PARG encoding genes of the plants or plants cells.
c. plants which contain a stress tolerance enhancing transgene coding for a plant-functional enzyme of the nicotinamide adenine dinucleotide salvage synthesis pathway including nicotinamidase, nicotinate phosphoribosyltransferase, nicotinic acid mononucleotide adenyl transferase, nicotinamide adenine dinucleotide synthetase or nicotine amide phosphorybosyltransferase. Examples of maize plants with the above-mentioned traits are non-exhaustively listed in Table A.

**Table A**

| **No.** | **Effected target or expressed principle(s)** | **Crop phenotype/Tolerance to** |
|---|---|---|
| A-1 | Acetolactate synthase (ALS) | Sulfonylureas, Imidazolinones, Triazolopyrimidines, Pyrimidyloxybenzoates, Phtalides |
| A-2 | AcetylCoA Carboxylase (ACCase) | Aryloxyphenoxyalkanecarboxylic acids, cyclohexanediones |
| A-3 | Hydroxyphenylpyruvate dioxygenase (HPPD) | Isoxazoles such as Isoxaflutol or Isoxachlortol, Triones such as mesotrione or sulcotrione |
| A-4 | Phosphinothricin acetyltransferase | Phosphinothricin |
| A-5 | O-Methyl transferase | altered lignin levels |
| A-6 | Glutamine synthetase | Glufosinate, Bialaphos |
| A-7 | Adenylosuccinate Lyase (ADSL) | Inhibitors of IMP and AMP synthesis |
| A-8 | Adenylosuccinate Synthase | Inhibitors of adenylosuccinate synthesis |
| A-9 | Anthranilate Synthase | Inhibitors of tryptophan synthesis and catabolism |
| A-10 | Nitrilase | 3,5-dihalo-4-hydroxy-benzonitriles such as Bromoxynil and Ioxinyl |
| A-11 | 5-Enolpyruvyl-3phosphoshikimate Synthase (EPSPS) | Glyphosate or sulfosate |
| A-12 | Glyphosate oxidoreductase | Glyphosate or sulfosate |
| A-13 | Protoporphyrinogen oxidase (PROTOX) | Diphenylethers, cyclic imides, phenylpyrazoles, pyridin derivatives, phenopylate, oxadiazoles, etc. |
| A-14 | Cytochrome P450 eg. P450 | Xenobiotics and herbicides such as Sulfonylureas |
| | SU1 | |
| A-15 | Dimboa biosynthesis (Bxl gene) | *Helminthosporium turcicum, Rhopalosiphum maydis, Diplodia maydis, Ostrinia nubilalis, lepidoptera sp.* |
| A-16 | CMIII (small basic maize seed peptide) | plant pathogenes eg. *fusarium, alternaria, sclerotina* |
| A-17 | Corn-SAFP (zeamatin) | plant pathogenes eg. *fusarium, alternaria, sclerotina, rhizoctonia, chaetomium, phycomyces* |
| A-18 | Hml gene | Cochliobulus |
| A-19 | Chitinases | plant pathogenes |
| A-20 | Glucanases | plant pathogenes |
| A-21 | Coat proteins | viruses such as maize dwarf mosaic virus, maize chlorotic dwarf virus |
| A-22 | *Bacillus thuringiensis* | *lepidoptera, coleoptera, diptera,* nematodes, eg. |
| | *toxins, VIP 3, Bacillus* | *ostrinia nubilalis, heliothis zea,* armyworms eg. |
| | *cereus toxins, Photorabdus* | *Spodoptera frugiperda,* corn rootworms, *sesamia* |
| | *and Xenorhabdus toxins* | sp.,black cutworm, asian corn borer, weevils |
| A-23 | 3-Hydroxysteroid oxidase | *lepidoptera, coleoptera, diptera,* nematodes, eg. *ostrinia nubilalis, heliothis zea,* armyworms eg. *Spodoptera frugiperda,* corn rootworms, *sesamia* sp.,black cutworm, asian corn borer, weevils |
| A-24 | Peroxidase | *lepidoptera, coleoptera, diptera,* nematodes, eg. *ostrinia nubilalis, heliothis zea,* armyworms eg. *spodoptera frugiperda,* corn rootworms, *sesamia* sp.,black cutworm, asian corn borer, weevils |
| A-25 | Aminopeptidase inhibitors | *lepidoptera, coleoptera, diptera, nematodes, eg.* |
| | eg. Leucine aminopeptidase | *ostrinia nubilalis, heliothis zea, armyworms eg.* |
| | inhibitor (LAPI) | *spodoptera* frugiperda, corn rootworms, sesamia sp., black cutworm, asian corn borer, weevils |
| A-26 | Limonene synthase | corn rootworms |
| A-27 | Lectines | *lepidoptera, coleoptera, diptera,* nematodes, eg. *ostrinia nubilalis, heliothis zea,armyworms* eg. *spodoptera frugiperda,* corn rootworms, *sesamia sp.,*black cutworm, asian corn borer, weevils |
| A-28 | Protease Inhibitors eg. | weevils, corn rootworm |
| | cystatin, patatin, virgiferin, | |
| | CPTI | |
| A-29 | ribosome inactivating protein | *lepidoptera, coleoptera, diptera,* nematodes, eg. *ostrinia nubilalis, heliothis zea,armyworms* eg. *spodoptera frugiperda,* corn rootworms, *sesamia sp.*,black cutworm, asian corn borer, weevils |
| A-30 | maize 5C9 polypeptide | *lepidoptera, coleoptera, diptera,* nematodes, eg. *ostrinia nubilalis, heliothis zea,armyworms* eg. *spodoptera frugiperda,* corn rootworms, *sesamia sp*.,black cutworm, asian corn borer, weevils |
| A-31 | HMG-CoA reductase | *lepidoptera, coleoptera, diptera,* nematodes, eg. *ostrinia nubilalis, heliothis zea,armyworms* eg. *spodoptera frugiperda,* corn rootworms, *sesamia sp.,*black cutworm, asian corn borer, weevils |
| A-32 | Inhibition of protein synthesis | Chloroactanilides such as Alachlor, Acetochlor, Dimethenamid |
| A-33 | Hormone mimic | 2,4-D, Mecoprop-P |

Plants or plant cultivars (obtained by plant biotechnology methods such as genetic engineering) which may also be treated according to the invention show altered quantity, quality and/or storage-stability of the harvested product and/or altered properties of specific ingredients of the harvested product such as :
1) transgenic plants which synthesize a modified starch, which in its physical-chemical characteristics, in particular the amylose content or the amylose/amylopectin ratio, the degree of branching, the average chain length, the side chain distribution, the viscosity behaviour, the gelling strength, the starch grain size and/or the starch grain morphology, is changed in comparison with the synthesised starch in wild type plant cells or plants, so that this is better suited for special applications.
2) transgenic plants which synthesize non starch carbohydrate polymers or which synthesize non starch carbohydrate polymers with altered properties in comparison to wild type plants without genetic modification. Examples are plants producing polyfructose, especially of the inulin and levan-type, plants producing alpha 1,4 glucans, plants producing alpha-1,6 branched alpha-1,4-glucans, plants producing alternan,
3) transgenic plants which produce hyaluronan.

Particularly useful transgenic plants which may be treated according to the invention are plants containing transformation events, or combination of transformation events, that are the subject of petitions for non-regulated status, in the United States of America, to the Animal and Plant Health Inspection Service (APHIS) of the United States Department of Agriculture (USDA) whether such petitions are granted or are still pending. At any time this information is readily available from APHIS (4700 River Road Riverdale, MD 20737, USA), for instance on its internet site (URL http://www.aphis.usda.gov/brs/not_reg.html). On the filing date of this application the petitions for nonregulated status that were pending with APHIS or granted by APHIS were those listed in table B which contains the following information:
Petition: the identification number of the petition. Technical descriptions of the transformation events can be found in the individual petition documents which are obtainable from APHIS, for example on the APHIS website, by reference to this petition number. These descriptions are herein incorporated by reference.
Extension of Petition: reference to a previous petition for which an extension is requested.
Institution: the name of the entity submitting the petition.

Regulated article: the plant species concerned.

Transgenic phenotype: the trait conferred to the plants by the transformation event.

Transformation event or line: the name of the event or events (sometimes also designated as lines or lines) for which nonregulated status is requested.

APHIS documents : various documents published by APHIS in relation to the Petition and which can be requested with APHIS.

**Table B, part 1**

| | **Petition** | **Extension of Petition Number ***** | **Institution** | **Regulated Article** | **Transgenic Phenotype** | **Transformation Event or Line** | **FR Notices** | **Preliminary EA **** or Risk Assessment** | **Final EA &Determ ination** |
|---|---|---|---|---|---|---|---|---|---|
| B-1 | 07-253-01p | | Syngenta | Corn | | MIR-162 Maize | | | |
| B-2 | 07-180-01p | | Florigene | Carnation | Altered Flower Color | IFD-1989∅-1 & IFD-199∅7-9 | | | |
| B-3 | 07-152-01p | | Pioneer | Corn | glyphosate & Imidazolinone tolerant | HT-98140 | | | |
| B-4 | 07-108-01p | | Syngenta | Cotton | Lepidopteran Resistant | COT67B | | | |
| B-5 | 06-354-01p | | Pioneer | Soybean | High Oleic Acid | DP-3∅5423-1 | | | |
| B-6 | 06-332-01p | | Bayer CropScience | Cotton | Glyphosate tolerant | GHB614 | | | |
| B-7 | 06-298-01p | | Monsanto | Corn | European Corn Borer resistant | MON 89034 | | | |
| B-8 | 06-271-01p | | Pioneer | Soybean | Glyphosate & acetolactate synthase tolerant | 356043 | 5-Oct-2007 | 06-271 01p pea | |
| B-9 | 05-280-01p | | Syngenta | Corn | Thermostable alpha-amylase | 3272 | | | |
| B-10 | 04-337-01p | | University of Florida | Papaya | Papaya Ringspot Virus Resistant | X17-2 | | | |
| B-11 | 04-110-01p | | Monsanto & Forage Genetics | Alfalfa | Glyphosate Tolerant | J101, J163 | 23-Mar-2007; 27.06.2005; 03.02.2005;2 4.11.2004 | 04-110 01p_pea | 04-110 01p_com |
| B-12 | 03-104-01p | | Monsanto & Scotts | Creeping bentgrass | Glyphosate Tolerant | ASR368 | Scoping & Status; 12-Oct-2005; 11.04.2005; 18.11.2004; 24.09.2004; 05.01.2004 | 03-104 01p_ra & CBG White Paper | |
| B-13 | 06-234-01p | 98-329 01p | Bayer CropScience | Rice | Phosphinothricin tolerant | LLRICE601 | 4-Dec-2006; 08.09.2006 | 06-234 01p_pea | 06-234 01p_com |
| B-14 | 06-178-01p | | Monsanto | Soybean | Glyphosate tolerant | MON 89788 | 02.08.2007; 05.02.2007 | 06-178 01p_pea | 06-178 01p_com |
| B-15 | 04-362-01p | | Syngenta | Corn | Corn Rootworm Protected | MIR604 | 23-Mar-2007; 22.02.2007; 10.01.2007 | 04-362 01p_pea | 04-362 01p_com |
| B-16 | 04-264-01p | | ARS | Plum | Plum Pox Virus Resistant | C5 | 13-July-2007; 16-May-2006 | 04-264 01p_pea | 04-264 01p_com |
| B-17 | 04-229-01p | | Monsanto | Corn | High Lysine | LY038 | 03.02.2006; 27.09.2005 | 04-229 01p_pea | 04-229 01p_com |
| B-18 | 04-125-01p | | Monsanto | Corn | Corn Rootworm Resistant | 88017 | 06.01.2006; 12.08.2005 | 04-125 01p_pea | 04-125 01p_com |
| B-19 | 04-086-01p | | Monsanto | Cotton | Glyphosate Tolerant | MON 88913 | 03.01.2005; 24.11.2004; 4-Oct-2004 | 04-086 01p_pea | 04-086 01p_com |
| B-20 | 03-353-01p | | Dow | Corn | Corn Rootworm Resistant | 59122 | 07.08.2005; 01.07.2005 | 03-353 01p_pea | 03-353 01p_com |
| B-21 | 03-323-01p | | Monsanto | Sugar Beet | Glyphosate Tolerant | H7-1 | 17-Mar-2005; 19-Oct-2004 | 03-323 01p_pea | 03-323 01p_com |
| B-22 | 03-181-01p | 00-136 01p | Dow | Corn | Lepidopteran Resistant & Phosphinothricin tolerant | TC-6275 | 01.11.2004; 17.08.2004 | 03-181 01p_pea | 03-181 01p_com |
| B-23 | 03-155-01p | | Syngenta | Cotton | Lepidopteran Resistant | COT 102 | 20.07.2005; 28.01.2005 | 03-155 01p_pea | 03-155 01p_com |
| B-24 | 03-036-01p | | Mycogen/Dow | Cotton | Lepidopteran Resistant | 281-24-236 | 13.08.2004; 9-Mar-2004 | 03-036 01p_pea | 03-036 01p_com |
| B-25 | 03-036-02p | | Mycogen/Dow | Cotton | Lepidopteran Resistant | 3006-210-23 | 13.08.20049 Mar-2004 | 03-036 02p_pea | 03-036 02p_com |
| B-26 | 02-042-01p | | Aventis | Cotton | Phosphinothericin tolerant | LLCotton25 | | | 02-042 01p_com |
| B-27 | 01-324-01p | 98-216 01p | Monsanto | Rapeseed | Glyphosate tolerant | RT200 | | | 01-324 01p_com |
| B-28 | 01-206-01p | 98-278 01p | Aventis | Rapeseed | Phosphinothricin tolerant & pollination control | MS1& RF1/RF2 | | | 01-206 01p_com |
| B-29 | 01-206-02p | 97-205 01p | Aventis | Rapeseed | Phosphinothricin tolerant | Topas 19/2 | | | 01-206 02p_com |
| B-30 | 01-137-01p | | Monsanto | Corn | Corn Rootworm Resistant | MON 863 | | | 01-137 01p_com |
| B-31 | 01-121-01p | | Vector | Tobacco | Reduced nicotine | Vector 21-41 | | | 01-121 01p_com |
| B-32 | 00-342-01p | | Monsanto | Cotton | Lepidopteran resistant | Cotton Event 15985 | | | 00-342- |
| | | | | | | | | | 01p_com |
| B-33 | 00-136-01p | | Mycogen c/o Dow & Pioneer | Corn | Lepidopteran resistant phosphinothricin tolerant | Line 1507 | | | 00-136 01p_com |
| B-34 | 00-011-01p | 97-099 01p | Monsanto | Corn | Glyphosate tolerant | NK603 | | | 00-011 01p_com |
| B-35 | 99-173-01p | 97-204 01p | Monsanto | Potato | PLRV & CPB resistant | RBMT22-82 | | | 99-173 01p_com |
| B-36 | 98-349-01p | 95-228 01p | AgrEvo | Corn | Phosphinothricin tolerant and Male sterile | MS6 | | | 98-349 01p_com |
| B-37 | 98-335-01p | | U. of Saskatchewan | Flax | Tolerant to soil residues of sulfonyl urea herbicide | CDC Triffid | | | 98-335 01p_com |
| B-38 | 98-329-01p | | AgrEvo | Rice | Phosphinothricin tolerant | LLRICE06, LLRICE62 | | | 98-329 01p_com |
| B-39 | 98-278-01p | | AgrEvo | Rapeseed | Phosphinothricin tolerant & Pollination control | MS8 & RF3 | | | 98-278 01p_com |
| B-40 | 98-238-01p | | AgrEvo | Soybean | Phosphinothricin tolerant | GU262 | | | 98-238 01p_com |
| B-41 | 98-216-01p | | Monsanto | Rapeseed | Glyphosate tolerant | RT73 | | | 98-216 01p_com |
| B-42 | 98-173-01p | | Novartis Seeds & Monsanto | Beet | Glyphosate tolerant | GTSB77 | | | 98-173 01p_com |
| B-43 | 98-014-01p | 96-068 01p | AgrEvo | Soybean | Phosphinothricin tolerant | A5547-127 | | | 98-014 01p_com |
| B-44 | 97-342-01p | | Pioneer | Corn | Male sterile & Phosphinothricin tolerant | 676,678,680 | | | 97-342 01p_com |
| B-45 | 97-339-01p | | Monsanto | Potato | CPB & PVY resistant | RBMT15-101, | | | 97-339- |
| | | | | | | SEMT15-02, SEMT15-15 | | | 01p_com |
| B-46 | 97-336-01p | | AgrEvo | Beet | Phosphinothricin tolerant | T-120-7 | | | 97-336 01p_com |
| B-47 | 97-287-01p | | Monsanto | Tomato | Lepidopteran resistant | 5345 | | | 97-287 01p_com |
| B-48 | 97-265-01p | | AgrEvo | Corn | Phosphinothricin tolerant & Lep. resistant | CBH-351 | | | 97-265 01p_com |
| B-49 | 97-205-01p | | AgrEvo | Rapeseed | Phosphinothricin tolerant | T45 | | | 97-205 01p_com |
| B-50 | 97-204-01p | | Monsanto | Potato | CPB & PLRV resistant | RBMT21-129 & RBMT21-350 | | | 97-204 01p_com |
| B-51 | 97-148-01p | | Bejo | Cichorium intybus | Male sterile | RM3-3, RM3-4, RM3-6 | | | 97-148 01p_com |
| B-52 | 97-099-01p | | Monsanto | Corn | Glyphosate tolerant | GA21 | | | 97-099 01p_com |
| B-53 | 97-013-01p | | Calgene | Cotton | Bromoxynil tolerant & Lepidopteran resistant | Events 31807 & 31808 | | | 97-013 01p_com |
| B-54 | 97-008-01p | | Du Pont | Soybean | Oil profile altered | G94-1, G94-19, G-168 | | | 97-008 01p_com |
| B-55 | 96-317-01p | | Monsanto | Corn | Glyphosate tolerant & ECB resistant | MON802 | | | 96-317 01p_com |
| B-56 | 96-291-01p | | DeKalb | Corn | European Corn Borer resistant | DBT418 | | | 96-291 01p_com |
| B-57 | 96-248-01p | 92-196 01p | Calgene | Tomato | Fruit ripening altered | 1 additional FLAVRSAVR line | | | 96-248 01p_com |
| B-58 | 96-068-01p | | AgrEvo | Soybean | Phosphinothricin tolerant | W62, W98, A2704-12, A2704-21, A5547-35 | | | 96-068 01p_com |
| B-59 | 96-051-01p | | Cornell U | Papaya | PRSV resistant | 55-1, 63-1 | | | 96-051 01p_com |
| B-60 | 96-017-01p | 95-093 01p | Monsanto | Corn | European Corn Borer resistant | MON809 & MON810 | | | 96-017 01p_com |
| B-61 | 95-352-01p | | Asgrow | Squash | CMV, ZYMV, WMV2 resistant | CZW-3 | | | 95-352 01p_com |
| B-62 | 95-338-01p | | Monsanto | Potato | CPB resistant | SBT02-5 & -7, ATBT04-6 &-27, 30, -31, -36 | | | 95-338 01p_com |
| B-63 | 95-324-01p | | Agritope | Tomato | Fruit ripening altered | 35 1 N | | | 95-324 01p_com |
| B-64 | 95-256-0-1p | | Du Pont | Cotton | Sulfonylurea tolerant | 19-51 a | | | 95-256 01p_com |
| B-65 | 95-228-01p | | Plant Genetic Systems | Corn | Male sterile | MS3 | | | 95-228 01p_com |
| B-66 | 95-195-01p | | Northrup King | Corn | European Corn Borer resistant | Bt11 | | | 95-195 01p_com |
| B-67 | 95-179-01p | 92-196 01p | Calgene | Tomato | Fruit ripening altered | 2 additional FLAVRSAVR lines | | | 95-179 01p_com |
| B-68 | 95-145-01p | | DeKalb | Corn | Phosphinothricin tolerant | B16 | | | 95-145 01p_com |
| B-69 | 95-093-01p | | Monsanto | Corn | Lepidopteran resistant | MON 80100 | | | 95-093 01p_com |
| B-70 | 95-053-01p | | Monsanto | Tomato | Fruit ripening altered | 8338 | | | 95-053- 01p_com |
| B-71 | 95-045-01p | | Monsanto | Cotton | Glyphosate tolerant | 1445, 1698 | | | 95-045 01p_com |
| B-72 | 95-030-01p | 92-196 01p | Calgene | Tomato | Fruit ripening altered | 20 additional FLAVRSAVR lines | | | 95-030 01p_com |
| B-73 | 94-357-01p | | AgrEvo | Corn | Phosphinothricin tolerant | T14, T25 | | | 94-357 01p_com |
| B-74 | 94-319-01p | | Ciba Seeds | Corn | Lepidopteran resistant | Event 176 | | | 94-319 01p_com |
| B-75 | 94-308-01p | | Monsanto | Cotton | Lepidopteran resistant | 531, 757, 1076 | | | 94-308 01p_com |
| B-76 | 94-290-01p | | Zeneca & Petoseed | Tomato | Fruit polygalacturonase level decreased | B, Da, F | | | 94-290 01p_com |
| B-77 | 94-257-01p | | Monsanto | Potato | Coleopteran resistant | BT6, BT10, BT12, BT16, BT17, BT18, BT23 | 10-Mar-1995 | 94-257-01p_ea | 94-257 01p_com |
| B-78 | 94-230-01p | 92-196 01p | Calgene | Tomato | Fruit ripening altered | 9 additional FLAVRSAVR lines | | | 94-230 01p_com |
| B-79 | 94-228-01p | | DNA Plant Tech | Tomato | Fruit ripening altered | 1345-4 | 24. Jan 95 | 94-228 01p_ea | 94-228 01p_com |
| B-80 | 94-227-01p | 92-196 01p | Calgene | Tomato | Fruit ripening altered | Line N73 1436-111 | 3-Oct-1994 | | 94-227 01p_com |
| B-81 | 94-090-01p | | Calgene | Rapeseed | Oil profile altered | pCGN3828-212/86-18 & 23 | | | 94-090 01p_com |
| B-82 | 93-258-01p | | Monsanto | Soybean | Glyphosate tolerant | 40-3-2 | | | 93-258 01p_com |
| B-83 | 93-196-01p | | Calgene | Cotton | Bromoxynil tolerant | BXN | 22. Feb 94 | | 93-196-01p_com |
| B-84 | 92-204-01p | | Upjohn | Squash | WMV2 & ZYMV resistant | ZW-20 | 13-Dec-1994 | 92-204 01p_ea | 92-204 01p_com |
| B-85 | 92-196-01p | | Calgene | Tomato | Fruit ripening altered | FLAVR SAVR | 19-Oct-1992 | | 92-196 01p_com |

Particularly useful transgenic maize or corn plants which may be treated according to the invention are plants listed in table B together with their trade names.

**Table B Part 2**

| **No.** | **Trade Names** | **Description** |
|---|---|---|
| B-86 | Agrisure 3000GT | CB/LL/RW/GT: tolerance to glyphosate and towards phosphinotricinby GA21 event, Bt 11 event, modified synthetic Cry3A gene |
| B-87 | Agrisure CB/LL | Bt 11 event plus tolerance towards phosphinotricin by GA21 event |
| B-88 | Agrisure CB/LL/RW | Bt 11 event, modified synthetic Cry3A gene, tolerance towards phosphinotricin by GA21 event |
| B-89 | Agrisure CB/RW | Bt-11 event, Cry1Ab + MIR604 event, modified Cry3A |
| B-90 | Agrisure GT | tolerance to glyphosate |
| B-91 | Agrisure GT/CB/LL | tolerance to glyphosate and towards phosphinotricin by GA21 event, Bt 11 event |
| B-92 | Agrisure GT/RW | tolerance to glyphosate, modified synthetic Cry3A gene |
| B-93 | Agrisure RW | MIR604 event, modified synthetic Cry3A gene |
| B-94 | Agrisure® (Family) | Bt-11event, CrylAb |
| B-95 | BiteGard® | crylA(b) gene. |
| B-96 | Bt-Xtra® | crylAc gene |
| B-97 | Clearfield® | non-GMO, tolerance to imazamox |
| B-98 | Herculex I | TC1507 event, Cry1F |
| B-99 | Herculex RW | DAS-59122-7 event, Cry34/35Ab1 |
| B-100 | Herculex Xtra | TC1507 event + DAS 59122-7event: Cry1F + Cry34/35Ab1 (Bt corn stack) |
| B-101 | Herculex Xtra | TC1507 event + DAS 59122-7event + NK603: Cry1F + Cry34/35Ab1 (Bt corn stack) |
| B-102 | Herculex® (Family) | insect resistance |
| B-103 | IMI® | tolerance to imidazolinones |
| B-104 | KnockOut® | SYN-EV176-9 event: cry1A(b) gene. |
| B-105 | Mavera® | high Lysine |
| B-106 | NatureGard® | crylA(b) gene. |
| B-107 | Roundup Ready® | GA21 event, NK603 event |
| B-108 | Roundup Ready@ 2 | e. g. NK603 event |
| B-109 | SmartStax | Eight-gene Stack from YieldGard VT Triple Pro, Herculex XTRA, |
| B-110 | StarLink® | Cry9c gene. |
| B-111 | STS® | tolerance to sulphonylureas |
| B-112 | YIELD GARD® | MON810 event, Cry1Ab |
| B-113 | YieldGard Plus | CrylAb + Cry3Bb1 (Bt corn stack) |
| B-114 | YieldGard Rootworm | MON863 event, Cry3Bb1 |
| B-115 | YieldGard Roundup Ready 2 | MON 810 event +Nk603 event, CrylAb |
| B-116 | YieldGard VT Pro | MON89034 event/Cry 1A.105 +Cry 2Ab2 |
| B-117 | YieldGard VT Rootworm | MON88017 event/Cry3Bb1 |
| B-118 | YieldGard VT Triple | MON88017 event/Cry3Bb1 + Mon810 event, Cry1Ab |
| B-119 | YieldGard VT Triple Pro | MON88017 event/Cry3Bb + MON89034 event/Cry 1A.105 + Cry 2Ab2 |
| B-120 | YieldMaker^{™} | include Roundup Ready 2 technology, YieldGard VT, YieldGard Corn Borer, YieldGard Rootworm and YieldGard Plus |

Particularly useful transgenic plants which may be treated according to the invention are plants containing transformation events, or combination of transformation events, that are listed for example in the databases from various national or regional regulatory agencies (see for example http://gmoinfo.jrc.it/gmp_browse.aspx and http://www.agbios.com/dbase.php).

Further particularly genetically modified maize or corn plants include plants containing a gene in an agronomically neutral or beneficial position as described by the event listed in Table C.

| No. | Event | Trait(s) which has been genetically modified |
|---|---|---|
| C-1 | 176 | Insect-resistant maize produced by inserting the cry1Ab gene from Bacillus thuringiensis subsp. kurstaki. The genetic modification affords resistance to attack by the European corn borer (ECB). |
| C-2 | 3751IR | Selection of somaclonal variants by culture of embryos on imidazolinone containing media. |
| C-3 | 676, 678, 680 | Male-sterile and glufosinate ammonium herbicide tolerant maize produced by inserting genes encoding DNA adenine methylase and phosphinothricin acetyltransferase (PAT) from Escherichia coli and Streptomyces viridochromogenes, respectively. |
| C-4 | ACS-ZM∅∅3-2 x MON-∅∅81∅-6 | Stacked insect resistant and herbicide tolerant corn hybrid derived from conventional cross-breeding of the parental lines T25 (OECD identifier: ACS-ZM∅∅3-2) and MON810 (OECD identifier:MON-∅∅81∅-6). |
| C-5 | B16 (DLL25) | Glufosinate ammonium herbicide tolerant maize produced by inserting the gene encoding phosphinothricin acetyltransferase (PAT) from Streptomyces hygroscopicus. |
| C-6 | BT11 (X4334CBR, X4734CBR) | Insect-resistant and herbicide tolerant maize produced by inserting the cry1Ab gene from Bacillus thuringiensis subsp. kurstaki, and the phosphinothricin N-acetyltransferase (PAT) encoding gene from S. viridochromogenes. |
| C-7 | CBH-351 | Insect-resistant and glufosinate ammonium herbicide tolerant maize developed by inserting genes encoding Cry9C protein from Bacillus thuringiensis subsp tolworthi and phosphinothricin acetyltransferase (PAT) from Streptomyces hygroscopicus. |
| C-8 | DAS-06275-8 | Lepidopteran insect resistant and glufosinate ammonium herbicide tolerant maize variety produced by inserting the cry1F gene from Bacillus thuringiensis var aizawai and the phosphinothricin acetyltransferase (PAT) from Streptomyces hygroscopicus. |
| C-9 | DAS-59122-7 | Corn rootworm-resistant maize produced by inserting the cry34Ab1 and cry35Ab1 genes from Bacillus thuringiensis strain PS149B1. The PAT encoding gene from Streptomyces viridochromogenes was introduced as a selectable marker. |
| C-10 | DAS-59122-7 x NK603 | Stacked insect resistant and herbicide tolerant maize produced by conventional cross breeding of parental lines DAS-59122-7 (OECD unique identifier: DAS-59122-7) with NK603 (OECD unique identifier: MON-∅∅6∅3-6). Corn rootworm-resistance is derived from DA |
| C-11 | DAS-59122-7 x TC1507 x NK603 | Stacked insect resistant and herbicide tolerant maize produced by conventional cross breeding of parental lines DAS-59122-7 (OECD unique identifier: DAS-59122-7) and TC1507 (OECD unique identifier: DAS-∅15∅7-1) with NK603 (OECD unique identifier: MON-∅∅6∅ |
| C-12 | DAS-∅15∅7-1 x MON-∅∅6∅3-6 | Stacked insect resistant and herbicide tolerant corn hybrid derived from conventional cross-breeding of the parental lines 1507 (OECD identifier: DAS-∅15∅7-1) and NK603 (OECD identifier: MON-∅∅6∅3-6). |
| C-13 | DBT418 | Insect-resistant and glufosinate ammonium herbicide tolerant maize developed by inserting genes encoding CrylAC protein from Bacillus thuringiensis subsp kurstaki and phosphinothricin acetyltransferase (PAT) from Streptomyces hygroscopicus |
| C-14 | DK404SR | Somaclonal variants with a modified acetyl-CoA-carboxylase (ACCase) were selected by culture of embryos on sethoxydim enriched medium. |
| C-15 | EXP1910IT | Tolerance to the imidazolinone herbicide, imazethapyr, induced by chemical mutagenesis of the acetolactate synthase (ALS) enzyme using ethyl methanesulfonate (EMS). |
| C-16 | GA21 | Introduction, by particle bombardment, of a modified 5-enolpyruvyl shikimate-3-phosphate synthase (EPSPS), an enzyme involved in the shikimate biochemical pathway for the production of the aromatic amino acids. |
| C-17 | IT | Tolerance to the imidazolinone herbicide, imazethapyr, was obtained by in vitro selection of somaclonal variants. |
| C-18 | LY038 | Altered amino acid composition, specifically elevated levels of lysine, through the introduction of the cordapA gene, derived from Corynebacterium glutamicum, encoding the enzyme dihydrodipicolinate synthase (cDHDPS). |
| C-19 | MIR604 | Corn rootworm resistant maize produced by transformation with a modified cry3A gene. The phosphomannose isomerase gene from E.coli was used as a selectable marker. |
| C-20 | MON80100 | Insect-resistant maize produced by inserting the cry1Ab gene from Bacillus thuringiensis subsp. kurstaki. The genetic modification affords resistance to attack by the European corn borer (ECB). |
| C-21 | MON802 | Insect-resistant and glyphosate herbicide tolerant maize produced by inserting the genes encoding the Cry1Ab protein from Bacillus thuringiensis and the 5-enolpyruvylshikimate-3-phosphate synthase (EPSPS) from A. tumefaciens strain CP4. |
| C-22 | MON809 | Resistance to European corn borer (Ostrinia nubilalis) by introduction of a synthetic cry1Ab gene. Glyphosate resistance via introduction of the bacterial version of a plant enzyme, 5-enolpyruvyl shikimate-3-phosphate synthase (EPSPS). |
| C-23 | MON810 | Insect-resistant maize produced by inserting a truncated form of the cry1Ab gene from Bacillus thuringiensis subsp. kurstaki HD-1. The genetic modification affords resistance to attack by the European corn borer (ECB). |
| C-24 | MON810 x MON88017 | Stacked insect resistant and glyphosate tolerant maize derived from conventional cross-breeding of the parental lines MON810 (OECD identifier: MON-∅∅81∅-6) and MON88017 (OECD identifier:MON-88017-3). European corn borer (ECB) resistance is derived from a |
| C-25 | MON832 | Introduction, by particle bombardment, of glyphosate oxidase (GOX) and a modified 5-enolpyruvyl shikimate-3-phosphate synthase (EPSPS), an enzyme involved in the shikimate biochemical pathway for the production of the aromatic amino acids. |
| C-26 | MON863 | Corn root worm resistant maize produced by inserting the cry3Bb1 gene from Bacillus thuringiensis subsp. kumamotoensis. |
| C-27 | MON88017 | Corn rootworm-resistant maize produced by inserting the cry3Bb1 gene from Bacillus thuringiensis subspecies kumamotoensis strain EG4691. Glyphosate tolerance derived by inserting a 5-enolpyruvylshikimate-3-phosphate synthase (EPSPS) encoding gene from Agr |
| C-28 | MON-∅∅6∅3-6 x MON-∅∅81∅-6 | Stacked insect resistant and herbicide tolerant corn hybrid derived from conventional cross-breeding of the parental lines NK603 (OECD identifier: MON-∅∅6∅3-6) and MON810 (OECD identifier: MON-∅∅81∅-6). |
| C-29 | MON-∅∅81∅-6 x LY038 | Stacked insect resistant and enhanced lysine content maize derived from conventional cross-breeding of the parental lines MON810 (OECD identifier: MON-∅∅81∅-6) and LY038 (OECD identifier: REN-∅∅∅38-3). |
| C-30 | MON-∅∅863-5 x | Stacked insect resistant and herbicide tolerant corn hybrid derived from |
| | MON-∅∅6∅3-6 | conventional cross-breeding of the parental lines MON863 (OECD identifier:MON-∅∅863-5) and NK603 (OECD identifier: MON-∅∅6∅3-6). |
| C-31 | MON-∅∅863-5 x | Stacked insect resistant corn hybrid derived from conventional cross- |
| | MON-∅∅81∅-6 | breeding of the parental lines MON863 (OECD identifier: MON- |
| | | ∅∅863-5) and MON810 (OECD identifier: MON-∅∅81∅-6) |
| C-32 | MON-∅∅863-5 x | Stacked insect resistant and herbicide tolerant corn hybrid derived from |
| | MON-∅∅81∅-6 x | conventional cross-breeding of the stacked hybrid MON-∅∅863-5 x |
| | MON-∅∅6∅3-6 | MON-∅∅81∅-6 and NK603 (OECD identifier:MON-∅∅6∅3-6). |
| C-33 | MON-∅∅∅21-9 x | Stacked insect resistant and herbicide tolerant corn hybrid derived from |
| | MON-∅∅81∅-6 | conventional cross-breeding of the parental lines GA21 (OECD |
| | | identifider: MON-∅∅∅21-9) and MON810 (OECD identifier: MON-∅∅81∅-6). |
| C-34 | MS3 | Male sterility caused by expression of the barnase ribonuclease gene from Bacillus amyloliquefaciens; PPT resistance was via PPT-acetyltransferase (PAT). |
| C-35 | MS6 | Male sterility caused by expression of the barnase ribonuclease gene from Bacillus amyloliquefaciens; PPT resistance was via PPT-acetyltransferase (PAT). |
| C-36 | NK603 | Introduction, by particle bombardment, of a modified 5-enolpyruvyl shikimate-3-phosphate synthase (EPSPS), an enzyme involved in the shikimate biochemical pathway for the production of the aromatic amino acids. |
| C-37 | SYN-BT∅11-1 x | Stacked insect resistant and herbicide tolerant maize produced by |
| | MON-∅∅∅21-9 | conventional cross breeding of parental lines BT11 (OECD unique identifier: SYN-BT∅11-1) and GA21 (OECD unique identifier: MON-∅∅∅21-9). |
| C-38 | T14, T25 | Glufosinate herbicide tolerant maize produced by inserting the phosphinothricin N-acetyltransferase (PAT) encoding gene from the aerobic actinomycete Streptomyces viridochromogenes. |
| C-39 | TC1507 | Insect-resistant and glufosinate ammonium herbicide tolerant maize produced by inserting the cry1F gene from Bacillus thuringiensis var. aizawai and the phosphinothricin N-acetyltransferase encoding gene from Streptomyces viridochromogenes. |
| C-40 | TC1507 x DAS-59122-7 | Stacked insect resistant and herbicide tolerant maize produced by conventional cross breeding of parental lines TC1507 (OECD unique identifier: DAS-∅15∅7-1) with DAS-59122-7 (OECD unique identifier: DAS-59122-7). Resistance to lepidopteran insects is deri |
| C-41 | SYTGA21 | Glyphosate Herbicide Tolerance |
| C-42 | SYTGA21 + Bt11 | CrylAb Corn borer protection |
| | | Glyphosate Herbicide Tolerance |
| C-43 | MON810 + | CrylAb corn borer resistance |
| | SYTGA21 | Glyphosate Herbicide Tolerance |
| C-44 | MON89034 | A full description of the genetic elements in MON 89034, including the approximate size, source and function is provided in Table 1. Table 1. Summary of the genetic elements inserted in MON 89034 E1-Left Border* : 239 bp DNA region from the B?Left Bord |
| C-45 | MON 89034 × | |
| | MON 88017 | |
| C-46 | MON 89034 × | |
| | NK603 | |
| C-47 | DP-∅9814∅-6 | 98140 maize has been genetically modified by insertion of the glyphosate-N-acetyltransferase (gat4621) gene and a modified maize acetolactate synthase (zm-hra) gene, along with the necessary regulatory elements for gene expression in the maize plant. The |
| C-48 | 3243M | Regulatory sequences: Promoter sequences derived from maize. The function of these sequences is to control expression of the insect resistance gene. Insect resistance gene: cry1Ab gene derived form Bacillus thuringiensis. The function of the product of th |
| C-49 | VSN-BTCRW | Bt-toxin corn root worm |
| C-50 | HCL201CRW2R R x LH324 | Bt-toxin corn root worm |
| C-51 | LH324 | from US 7223908 B1 |
| C-52 | VSN-RR Bt | RoundupReady Bt-toxin |
| C-51 | FR1064LL x | Ref: Gerdes, J. T., Behr, C. F., Coors, J. G., and Tracy, W. F. 1993. FR2108 Compilation of North American Maize Breeding Germplasm. W. F. Tracy, J. G. Coors, and J. L. Geadelmann, eds. Crop Science Society of America, Madison, WI |
| | | |
| | | and US 6407320 B1 |
| C-52 | VSN-Bt | Bt-toxin |

In a very particular embodiment a method of reducing the contamination with Fumonisin of the B-type of maize or corn plants and/or plant material from maize or corn before and/or after harvest and/or during storage is described which comprises the use of Epoxiconazole and Azoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Ipconazole and Azoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Propiconazole and Azoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prothioconazole and Azoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole and Azoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Azoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Pyraclostrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Ipconazole and Pyraclostrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Propiconazole and Pyraclostrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prothioconazole and Pyraclostrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole and Pyraclostrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Pyraclostrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Fluoxastrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Ipconazole and Fluoxastrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Propiconazole and Fluoxastrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prothioconazole and Fluoxastrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole and Fluoxastrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Fluoxastrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Trifloxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Ipconazole and Trifloxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Propiconazole and Trifloxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prothioconazole and Trifloxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole and Trifloxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Trifloxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Fludioxonil und Myclobutanil. on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Ipconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Propiconazole and Ipconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prothioconazole and Ipconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole and Ipconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Ipconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Propiconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prothioconazole and Propiconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole and Propiconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Propiconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Prothioconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole and Prothioconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Prothioconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Metconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole and Metconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole and Tebuconazole. on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Cyproconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Epoxiconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Flusilazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Ipconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Propiconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prothioconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Metconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Tebuconazole on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Triadimenol on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Azoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Fluoxastrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Kresoxim-methyl on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Picoxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Pyraclostrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Trifloxystrobin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Boscalid on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Chlorothalonil on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Cyprodinil on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Fludioxonil on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Fluopyram on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Myclobutonil on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Prochloraz on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of Spiroxamine on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of N-(3'4'-dichloro-5-fluoro[11'-biphenyl]-2-yl)-3-(difluoromethyl)-1-methyl-1H-pyrazole-4-carboxamide on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of 5-Chlor-6-(246-trifluorphenyl)-7-(4-methylpiperidin-1-yl)[124]triazolo[15 a]pyrimidin on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of 1-methyl-N-{2-[1'-methyl-11'-bi(cyclopropyl)-2-yl]phenyl}-3-(trifluoromethyl)-1H-pyrazole-4-carboxamide on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of N-{2-[11'-bi(cyclopropyl)-2-yl]phenyl}-1-methyl-3-(trifluoromethyl)-1H-pyrazole-4-carboxamide on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of 1-methyl-N-{2-[1'-methyl-11'-bi(cyclopropyl)-2-yl]phenyl}-3-(difluoromethyl)-1H-pyrazole-4-carboxamide on genetically modified maize wherein the active principle expressed by the genetically modified plant corresponds to a line of table A, B, or C.

In a very particular embodiment a method of reducing the contamination with Fumonisin of the B-type of maize or corn plants and/or plant material from maize or corn before and/or after harvest and/or during storage is described which comprises the use of N-{2-[11'-bi(cyclopropyl)-2-yl]phenyl}-1-methyl-3-(difluoromethyl)-1H-pyrazole-4-carboxamide on genetically modified maize wherein the active principle expressed by the genetically modified plant corresponds to a line of table A, B, or C.

In a further aspect there is provided a composition comprising one or a combination of two or more fungicidal compounds selected from the group (I) according to this invention. Preferably the fungicidal composition comprises agriculturally acceptable additives, solvents, carriers, surfactants, or extenders.

According to the invention, the term "carrier" denotes a natural or synthetic, organic or inorganic compound with which one or a combination of two or more fungicidal compounds selected from the group (I) are combined or associated to make it easier to apply, notably to the parts of the plant. This support is thus preferably inert and should be at least agriculturally acceptable. The support may be a solid or a liquid.

Suitable solid carriers are the following:
e.g. ammonium salts and natural rock powders, such as kaolins, clays, talcum, chalk, quartz, attapulgite, montmorillonite or diatomaceous earth and synthetic rock powders such as highly disperse silica, aluminium oxide and silicates, oil waxes, solid fertilizers, water, alcohols, preferably butanol, organic solvents, mineral and vegetable oils and derivatives thereof;
suitable solid carriers for granules are: for example crushed and fractionated natural rocks such as calcite, marble, pumice, sepiolite, dolomite and synthetic granules of inorganic and organic powders and granules of organic materials such as paper, sawdust, coconut shells, corn stalks and tobacco stalks; By liquefied gaseous diluents or supports are meant such liquids that are gaseous at normal temperature and under normal pressure, for example, aerosol propellants such as halohydrocarbons as well as butane, propane, nitrogen and carbon dioxide.

It is possible to use in the formulations adhesives such as carboxymethylcellulose, natural and synthetic powdered, granular or latex-like polymers such as gum arabic, polyvinyl alcohol, polyvinyl acetate and natural phospholipids, such as cephalins and lecithins and synthetic phospholipids. Further additives can be mineral or vegetable oils and waxes, optionally modified.

Suitable extenders are, for example, water, polar and non-polar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as *N*-alkylpyrrolidones) and lactones, the sulphones and sulphoxides (such as dimethyl sulphoxide).

If the extender used is water, it is also possible to employ, for example, organic solvents as auxiliary solvents. Essentially, suitable liquid solvents are: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethyl sulphoxide, and also water.

The composition according to the invention may also comprise additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the present compounds containing sulphate, sulphonate and phosphate functions, for example alkylaryl polyglycol ethers, alkyl sulphonates, alkyl sulphates, aryl sulphonates, protein hydrolyzates, lignosulphite waste liquors and methyl cellulose. The presence of at least one surfactant is generally essential when the active compound and / or the inert support are water-insoluble and when the vector agent for the application is water. Preferably, surfactant content may be comprised from 5% to 40% by weight of the composition.

Suitable emulsifiers and/or foam-forming agents are: for example non-ionic and anionic emulsifiers, such as polyoxyethylene fatty acid esters, polyoxyethylene fatty alcohol ethers, suitable dispersants are non-ionic and/or ionic substances, for example from the classes comprising alcohol POE and/or POP ethers, acid and/or POP or POE esters, alkyl-aryl and/or POP or POE ethers, fatty and/or POP-POE adducts, POE and/or POP polyol derivatives, POE and/or POP/sorbitan or sugar adducts, alkyl or aryl sulphates, sulphonates and phosphates or the corresponding PO ether adducts. Furthermore, suitable oligomers or polymers, for example based on vinyl monomers, acrylic acid, EO and/or PO alone or in combination with for example (poly-) alcohols or (poly-amines. Use can also be made of lignin and sulphonic acid derivatives thereof, simple and modified celluloses, aromatic and/or aliphatic sulphonic acids and adducts thereof with formaldehyde. Suitable as dispersants are for example lignosulphite waste liquors and methylcellulose.

Colouring agents such as inorganic pigments, for example iron oxide, titanium oxide, ferrocyanblue, and organic pigments such as alizarin, azo and metallophthalocyanine dyes, and trace elements such as iron, manganese, boron, copper, cobalt, molybdenum and zinc salts can be used.

Optionally, other additional components may also be included, e.g. protective colloids, adhesives, thickeners, thixotropic agents, penetration agents, stabilisers, sequestering agents. More generally, the active compounds can be combined with any solid or liquid additive, which complies with the usual formulation techniques.

In general, the composition according to the invention may contain from 0.05 to 99% by weight of active compounds, preferably from 1 to 70% by weight, most preferably from 10 to 50 % by weight.

The combination or composition according to the invention can be used as such, in form of their formulations or as the use forms prepared therefrom, such as aerosol dispenser, capsule suspension, cold fogging concentrate, hot fogging concentrate, encapsulated granule, fine granule, flowable concentrate for seed treatment, ready-to-use solutions, dustable powder, emulsifiable concentrate, emulsion oil in water, emulsion water in oil, macrogranule, microgranule, oil dispersible powder, oil miscible flowable concentrate, oil miscible liquid, froths, paste, seed coated with a pesticide, suspension concentrate (flowable concentrate), suspensions-emulsions-concentrates, soluble concentrate, suspensions, soluble powder, granule, water soluble granules or tablets, water soluble powder for seed treatment, wettable powder, natural and synthetic materials impregnated with active compound, micro-encapsulation in polymeric materials and in jackets for seed, as well as ULV-cold and hot fogging formulations, gas (under pressure), gas generating product, plant rodlet, powder for dry seed treatment, solution for seed treatment, ultra low volume (ULV) liquid, ultra low volume (ULV) suspension, water dispersible granules or tablets, water dispersible powder for slurry treatment.

These formulations are prepared in a known manner by mixing the active compounds or active compound combinations with customary additives, such as, for example, customary extenders and also solvents or diluents, emulsifiers, dispersants, and/or bonding or fixing agent, wetting agents, water repellents, if appropiate siccatives and UV stabilisers, colorants, pigments, defoamers, preservatives, secondary thickeners, adhesives, gibberellins and water as well further processing auxiliaries.

These compositions include not only compositions which are ready to be applied to the plant or seed to be treated by means of a suitable device, such as a spraying or dusting device, but also concentrated commercial compositions which must be diluted before application to the crop.

The reduction in mycotoxin contamination is carried out primarily by treating the soil and the above-ground parts of plants with crop protection agents, in case of transgenic maize also the seed. Owing to the concerns regarding a possible impact of crop protection agents on the environment and the health of humans and animals, there are efforts to reduce the amount of active compounds applied.

The active compound and active compound combinations according to the invention can be used in its commercially available formulations and in the use forms, prepared from these formulations, as a mixture with other active compounds, such as insecticides, attractants, sterilizing agents, bactericides, acaricides, nematicides, fungicides, growth-regulating substances, herbicides, safeners, fertilizers or semiochemicals.

The treatment of plants and plant parts with one or a combination of two or more fungicidal compounds selected from the group (I) according to the invention is carried out directly or by action on their environment, habitat or storage area by means of the normal treatment methods, for example by watering (drenching), drip irrigation, spraying, vaporizing, atomizing, broadcasting, dusting, foaming, spreading-on, and as a powder for dry seed treatment, a solution for seed treatment, a water-soluble powder for seed treatment, a water-soluble powder for slurry treatment, or by encrusting, in the case of plant material, in particular in the case of seeds, furthermore by dry treatments, slurry treatments, liquid treatments, by one- or multi-layer coating.. It is furthermore possible to apply the active compounds by the ultra-low volume method, or to inject the active compound preparation or the active compound itself into the soil.

The method of treatment according to the invention also provides the use of one or a combination of two or more fungicidal compounds selected from the group (I) in a simultaneous, separate or sequential manner.

The dose of active compound/ application rate usually applied in the method of treatment according to the invention is generally and advantageously
- for foliar treatments: from 0.1 to 10,000 g/ha, preferably from 10 to 1,000 g/ha, more preferably from 50 to 300g/ha; in case of drench or drip application, the dose can even be reduced, especially while using inert substrates like rockwool or perlite;
- for seed treatment: from 2 to 200 g per 100 kilogram of seed, preferably from 3 to 150 g per 100 kilogram of seed;
- for soil treatment: from 0.1 to 10,000 g/ha, preferably from 1 to 5,000 g/ha.

The doses herein indicated are given as illustrative examples of the method according to the invention. A person skilled in the art will know how to adapt the application doses, notably according to the nature of the plant or crop to be treated.

The method of treatment according to the invention may also be useful to treat plant material of maize such as seeds, seedlings or seedlings pricking out and plants or plants pricking out. This method of treatment can also be useful to treat roots. The method of treatment according to the invention can also be useful to treat the over-ground parts of the plant such as stems, ears, tassels, silks, cobs and kernels of the concerned plant.

The invention comprises a procedure in which the transgenic seed is treated at the same time with one or a combination of two or more fungicidal compounds selected from the group (I). It further comprises a method in which the transgenic seed is treated with one or a combination of two or more fungicidal compounds selected from the group (I) separately.

The invention also comprises a transgenic seed, which has been treated with one or a combination of two or more fungicidal compounds selected from the group (I) at the same time. The invention also comprises a transgenic seed, which has been treated with one or a combination of two or more fungicidal compounds selected from the group (I) separately. For the latter transgenic seed, the active ingredients can be applied in separate layers. These layers can optionally be separated by an additional layer that may or may not contain an active ingredient.

The compound or a combination of two or more fungicidal compounds selected from the group (I) and/or compositions of the invention are particularly suitable for the treatment of transgenic seeds. A large part of the damage caused by pests and/or phytopathogenic fungi on cultigens occurs by infestation of the transgenic seed during storage and after sowing the transgenic seed in the ground as well as during and after germination of the plants. This phase is especially critical since the roots and shoots of the growing plant are particularly sensitive and even a small amount of damage can lead to withering of the whole plant. There is therefore considerable interest in protecting the transgenic seed and the germinating plant by the use of suitable agents.

The control of pests and/or phytopathogenic fungi by treatment of the transgenic seeds of plants has been known for a considerable time and is the object of continuous improvement. However, there are a number of problems in the treatment of transgenic seed that cannot always be satisfactorily solved. Therefore it is worthwhile to develop methods for the protection of transgenic seeds and germinating plants which makes the additional application of plant protection agents after seeding or after germination of the plants unnecessary. It is further worthwhile to optimize the amount of the applied active material such that the transgenic seed and the germinating plants are protected against infestation by pests and/or phytopathogenic fungi as best as possible without the plants themselves being damaged by the active compound applied. In particular, methods for the treatment transgenic seed should also take into account the intrinsic fungicidal and insecticidal properties of transgenic plants in order to achieve optimal protection of the transgenic seed and germinating plants with a minimal expenditure of plant protection agents.

The present invention relates therefore especially to a method for the protection of transgenic seed and germinating plants from infestation with pests and/or phytopathogenic fungi and/or microorganisms in that the transgenic seed is treated with the combination/composition of the invention. In addition the invention relates also to the use of the combination/composition of the invention for the treatment of transgenic seed for protection of the transgenic seed and the germinating plants from pests and/or phytopathogenic fungi and/or microorganisms. Furthermore the invention relates to transgenic seed which was treated with a combination/ composition of the invention for protection from pests and/or phytopathogenic fungi and/or microorganisms.

One of the advantages of the invention is because of the special systemic properties of the combination/ composition of the invention treatment with one or a combination of two or more fungicidal compounds selected from the group (I) protect not only the transgenic seed itself but also the plants emerging after sprouting. In this way the direct treatment of the culture at the time of sowing or shortly thereafter can be omitted.

A further advantage is the synergistic increase in fungicidal activity of the combination/ composition of the invention in comparison to the respective individual active compounds, which extends beyond the sum of the activity of both individually, applied active compounds. In this way an optimization of the amount of active compound applied is made possible.

It is also be regarded as advantageous that the mixtures of the invention can also be used in particular with such transgenic seeds whereby the plants emerging from this seed are capable of the expression of a protein directed against pests and phytopathogenic fungi and/or microorganisms . By treatment of such seed with the agents of the invention certain pests and/or phytopathogenic fungi and/or microorganisms can already be controlled by expression of the, for example, insecticidal protein, and it is additionally surprising that a synergistic activity supplementation occurs with the agents of the invention, which improves still further the effectiveness of the protection from pest infestation.

As already described, the treatment of transgenic seed with a one or a combination of two or more fungicidal compounds selected from the group (I) of the invention is of particular importance. This concerns the seeds of plants which generally contain at least one heterologous gene that controls the expression of a polypeptide with special insecticidal properties. The heterologous gene in transgenic seed can originate from microorganisms such as *Bacillus, Rhizobium, Pseudomonas, Serratia, Trichoderma, Clavibacter, Glomus* or *Gliocladium.* The present invention is particularly suitable for the treatment of transgenic seed that contains at least one heterologous gene that originates from *Bacillus sp.* and whose gene product exhibits activity against the European corn borer and/or western corn rootworm. Particularly preferred is a heterologous gene that originates from *Bacillus thuringiensis.*

Within the context of the present invention one or a combination of two or more fungicidal compounds selected from the group (I) of the invention is applied to the transgenic seed alone or in a suitable formulation. Preferably the transgenic seed is handled in a state in which it is so stable, that no damage occurs during treatment. In general treatment of the transgenic seed can be carried out at any time between harvest and sowing. Normally transgenic seed is used that was separated from the plant and has been freed of spadix, husks, stalks, pods, wool or fruit flesh. Use of transgenic seed that was harvested, purified, and dried to moisture content of below 15 % w/w. Alternatively, transgenic seed treated with water after drying and then dried again can also be used.

In general care must be taken during the treatment of the transgenic seed that the amount of one or a combination of two or more fungicidal compounds selected from the group (I) of the invention and/or further additive applied to the transgenic seed is so chosen that the germination of the transgenic seed is not impaired and the emerging plant is not damaged. This is to be noted above all with active compounds which can show phytotoxic effects when applied in certain amounts.

One or a combination of two or more fungicidal compounds selected from the group (I) of the invention can be applied directly, that is without containing additional components and without being diluted. It is normally preferred to apply the combination/ composition to the transgenic seed in the form of a suitable formulation. Suitable formulations and methods for transgenic seed treatment are known to the person skilled in the art and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

One compound or a combination of two or more fungicidal compounds selected from the group (I) and compositions which can be used according to the invention can be converted into customary seed dressing formulations, such as solutions, emulsions, suspensions, powders, foams, slurries or other coating materials for seed, and also ULV formulations.

These formulations are prepared in a known manner by mixing the active compounds or active compound combinations with customary additives, such as, for example, customary extenders and also solvents or diluents, colorants, wetting agents, dispersants, emulsifiers, defoamers, preservatives, secondary thickeners, adhesives, gibberellins and optionally water as well.

Suitable colorants that may be present in the seed dressing formulations of the invention include all colorants customary for such purposes. Use may be made both of pigments, of sparing solubility in water, and of dyes, which are soluble in water. Examples that may be mentioned include the colorants known under the designations rhodamine B, C.I. Pigment Red 112, and C.I. Solvent Red 1.

Suitable wetting agents that may be present in the seed dressing formulations of the invention include all substances which promote wetting and are customary in the formulation of active agrochemical substances. With preference it is possible to use alkylnaphthalene-sulphonates, such as diisopropyl- or diisobutylnaphthalene-sulphonates.

Suitable dispersants and/or emulsifiers that may be present in the seed dressing formulations of the invention include all nonionic, anionic, and cationic dispersants which are customary in the formulation of active agrochemical substances as outlined above.

Suitable defoamers that may be present in the seed dressing formulations of the invention include all foam-inhibiting substances which are customary in the formulation of active agrochemical substances. With preference it is possible to use silicone defoamers and magnesium stearate.

Suitable preservatives that may be present in the seed dressing formulations of the invention include all substances which can be used for such purposes in agrochemical compositions. By way of example, mention may be made of dichlorophen and benzyl alcohol hemiformal.

Suitable secondary thickeners that may be present in the seed dressing formulations of the invention include all substances which can be used for such purposes in agrochemical compositions. Preferred suitability is possessed by cellulose derivatives, acrylic acid derivatives, xanthan, modified clays, and highly disperse silica.

Suitable adhesives that may be present in the seed dressing formulations of the invention include all customary binders which can be used in seed dressing. With preference, mention may be made of polyvinylpyrrolidone, polyvinyl acetate, polyvinyl alcohol and tylose.

Suitable gibberellins that may be present in the seed dressing formulations of the invention include preferably gibberelin A1, A3 (=gibberellinic acid), A4, and A7, particular preferably gibberelin A3 (=gibberellinic acid). The gibberellins of the formula (II) are known, the nomenclature of the gibberlins can be found the reference mentioned below (cf. R. Wegler "Chemie der Pflanzenschutz- and Schädlingsbekämpfungsmittel", Volume 2, Springer Verlag, Berlin-Heidelberg-New York, 1970, pages 401 - 412).

Suitable mixing equipment for treating seed with the seed dressing formulations to be used according to the invention or the preparations prepared from them by adding water includes all mixing equipment which can commonly be used for dressing. The specific procedure adopted when dressing comprises introducing the seed into a mixer, adding the particular desired amount of seed dressing formulation, either as it is or following dilution with water beforehand, and carrying out mixing until the formulation is uniformly distributed on the seed. Optionally, a drying operation follows.

The invention is illustrated by the example below. The invention is not restricted to the example only.

### Example

### Production of Fumonisin FB1 by Fusarium verticillioides

The method used was adapted to microtiter plates from the method described by Lopez-Errasquin et al., Journal of Microbiological Methods 68 (2007) 312-317.

Fumonisin-inducing liquid medium (Jiménez et al., Int. J. Food Microbiol. (2003), 89, 185-193) was inoculated with a concentrated spore suspension of Fusarium verticillioides (350000 spores/ml, stored at -160°C) to a final concentration of 2000 spores/ml.

Compounds were solved 10mM in 100% DMSO and diluted to 100µM in H2O and afterwards to 40µM, 8µM, 1.6µM, 0.32µM, 0.064µM, 0.0128µM in 10%DMSO. 5 µl of the each dilution were mixed with 95µl inoculated media in one well of a 96 well microarray plate. The plate was covered and incubated at 20°C for 5 days.

After 5 days a sample of the liquid media was taken and in 10 % acetonitrile diluted. The concentration of FB1 of this diluted samples were analysed per HPLC-MS/MS HPLC-MS/MS was done with the following parameters:

| | |
|---|---|
| Instrumentation mass-spec: | Applied Biosystems API4000 QTrap |
| HPLC: | Agilent 1100 |
| Autosampler: | CTC HTS PAL |
| Chromatography column: | Waters Atlantis T3 (50x2mm) |

Results are shown for Metconazole, Prothioconazole, Epoxiconazole, Tebuconazole,Vinclozoline in the graph 1 to 5.

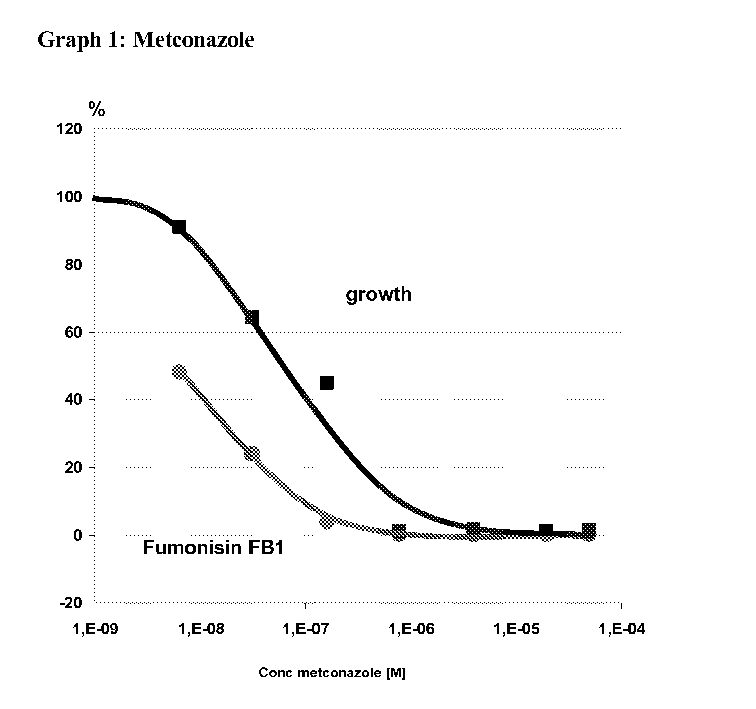

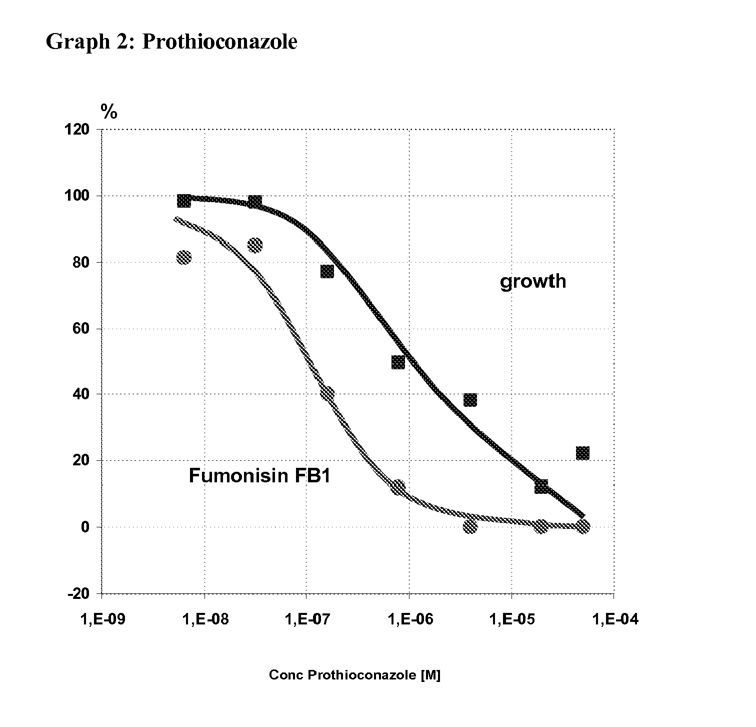

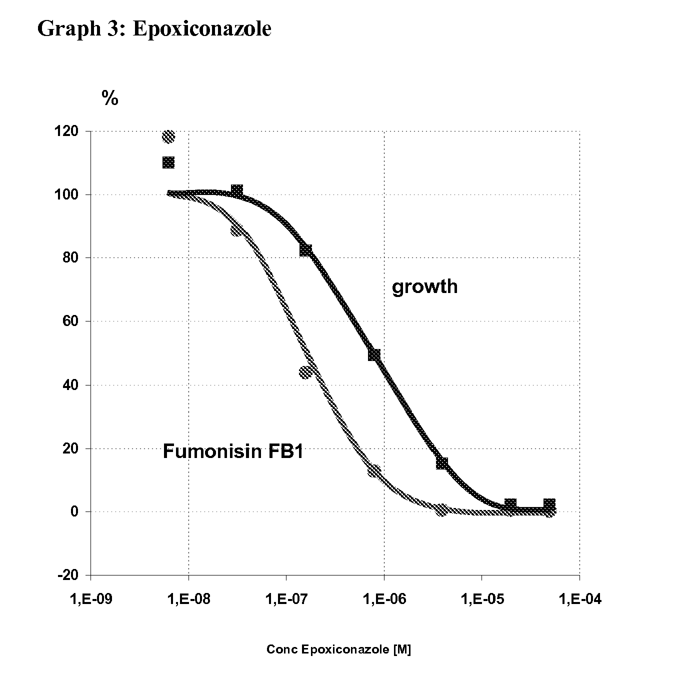

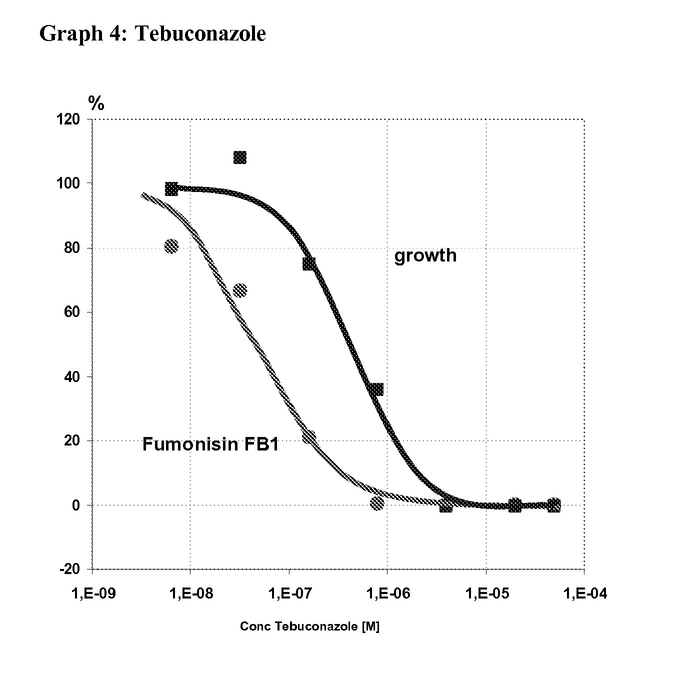

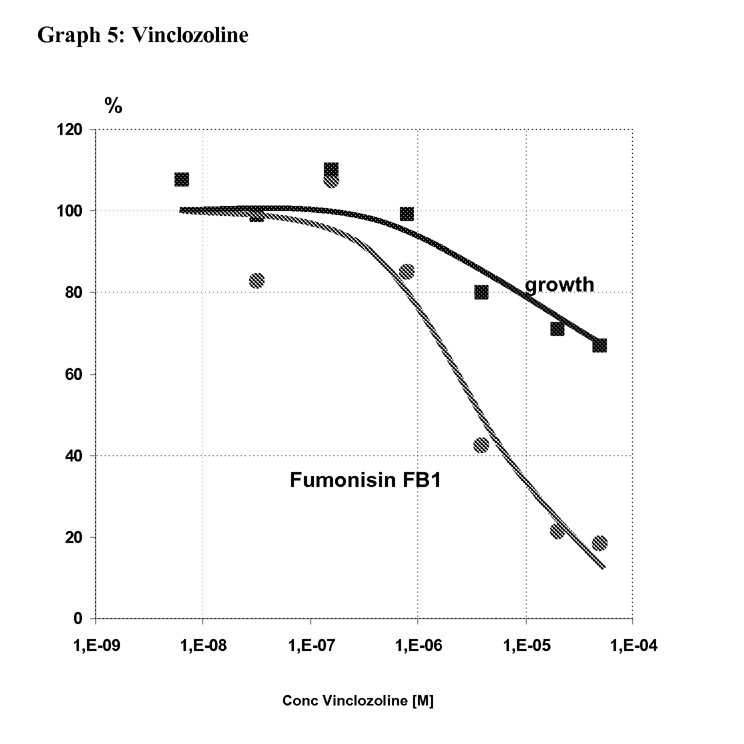

## Claims

1. A method of reducing mycotoxin contamination of maize or corn plants and/or plant material from maize or corn before and/or after harvest and/or during storage which comprises the use of one or a combination of two or more fungicidal compounds selected from the group (I) group (I) comprising of (Ia) members of the azole group as Cyproconazole, Epoxiconazole, Flusilazole, Ipconazole, Propiconazole, Prothioconazole, Metconazole, Tebuconazole, Triadimenol, (Ib) members of the strobilurin group as Azoxystrobin, Fluoxastrobin, Kresoxim-methyl, Picoxystrobin, Pyraclostrobin, Trifloxystrobin, and (Ic) a group of other fungides as Boscalid, Chlorothalonil, Cyprodinil, Fludioxonil, Fluopyram, Myclobutonil, Prochloraz, Spiroxamine, N-(3',4'-dichloro-5-fluoro[1,1'-biphenyl]-2-yl)-3-(difluoromethyl)-1-methyl-1H-pyrazole-4-carboxamide, 5-Chlor-6-(2,4,6-trifluorphenyl)-7-(4-methylpiperidin-1-yl)[1,2,4]triazolo[1,5-a]pyrimidin, 1-methyl-N-{2-[1'-methyl-1,1'-bi(cyclopropyl)-2-yl]phenyl}-3-(trifluoromethyl)-1H-pyrazole-4-carboxamide, N-{2-[1,1'-bi(cyclopropyl)-2-yl]phenyl}-1-methyl-3-(trifluoromethyl)-1H-pyrazole-4-carboxamide, 1-methyl-N-{2-[1'-methyl-1,1'-bi(cyclopropyl)-2-yl]phenyl}-3-(difluoromethyl)-1H-pyrazole-4-carboxamide, N-{2-[1,1'-bi(cyclopropyl)-2-yl]phenyl}-1-methyl-3-(difluoromethyl)-1H-pyrazole-4-carboxamide.

2. The method according to claim 1 wherein maize or corn plants and/or plant material from maize or corn before and/or after harvest and/or during storage are genetically modified.

3. The method according to claim 1 or 2 wherein the mycotoxin contamination is caused by fungi, such as one or more Fusarium species, infestation of maize or corn plants and/or plant material from maize or corn before and/or after harvest and/or during storage.

4. The method according to claim 1 or 2 wherein the mycotoxin contamination is caused by fungi, such as one or more Aspergillus species, infestation of maize or corn plants and/or plant material from maize or corn before and/or after harvest and/or during storage.

5. The method according to claims 1 to 2 wherein the mycotoxin is selected from the group consisting of aflatoxins B1, B2, G1 and G2, ochratoxin A, B, C as well as T-2 toxin, HT-2 toxin, isotrichodermol,DAS, 3-deacetylcalonectrin, 3,15-dideacetylcalonectrin, scirpentriol, neosolaniol; 15-acetyldeoxynivalenol, nivalenol, 4-acetylnivalenol (fusarenone-X), 4,15-diacetylnivalenol, 4,7,15-acetylnivalenol, and DON and their various acetylated derivatives as well as fumonisins of the B-type.

6. The method according to claim 1 to 5 wherein the fungicide is selected from the group consisting of Epoxiconazole, Ipconazole, Prothioconazole, Tebuconazole, from group (Ib) members of the strobilurin group as Trifloxystrobin, and from group (Ic) Cyprodinil, Fludioxonil.

7. The method according to claim 1 to 5 wherein the fungicide combination is selected from the group consisting of tebuconazole and prothioconazole, tebuconazole and trifloxystrobin , trifloxystrobin and prothioconazole.

8. The method according to claim 1 to 7 wherein the maize or corn plants and/or plant material from maize or corn before and/or after harvest and/or during storage are further treated with attractants, sterilizing agents, bactericides, nematicides, fungicides, growth-regulating substances, herbicides, safeners, fertilizers, inoculants or other plant-growth influencing compounds or semiochemicals.
